(19) **Europäisches Patentamt / European Patent Office / Office européen des brevets**

(11) **EP 1 820 816 A1**

(12) # EUROPEAN PATENT APPLICATION
published in accordance with Art. 158(3) EPC

(43) Date of publication:
**22.08.2007 Bulletin 2007/34**

(21) Application number: **05809742.9**

(22) Date of filing: **25.11.2005**

(51) Int Cl.:
***C08G 85/00*** (2006.01)   ***C08G 63/78*** (2006.01)

(86) International application number:
**PCT/JP2005/021643**

(87) International publication number:
**WO 2006/059536 (08.06.2006 Gazette 2006/23)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **30.11.2004 JP 2004345241**
**30.11.2004 JP 2004345246**
**16.08.2005 JP 2005235816**

(71) Applicant: **Asahi Kasei Chemicals Corporation Tokyo 100-8440 (JP)**

(72) Inventors:
• **YOKOYAMA, Hiroshi**
**1008440 Tokyo (JP)**
• **AMINAKA, Muneaki**
**1008440 Tokyo (JP)**

(74) Representative: **Alcock, David**
**D Young & Co**
**120 Holborn**
**London EC1N 2DY (GB)**

(54) **PROCESSES AND APPARATUSES FOR PRODUCING POLYCONDENSATE AND MOLDED OBJECT THEREOF**

(57)   A method for producing a polycondensation polymer, which comprises: introducing a prepolymer of a polycondensation polymer into a polymerization reactor through a feed opening in a molten state; discharging the introduced prepolymer through holes of a perforated plate; and then polycondensing the prepolymer under reduced pressure, while allowing the prepolymer to fall along a support, wherein the perforated plate has two or more areas and polycondensation is performed by introducing a prepolymer and/or a polymer modifier into each of the areas and discharging the introduced prepolymer and/or polymer modifier through holes of each of the areas.

EP 1 820 816 A1

**Description**

Technical Field

The present invention relates a method and an apparatus for producing a polycondensation polymer and a molded article thereof.

Background Art

Polycondensation polymers, which typically include polyester resins such as polyethylene terephthalate (hereinafter abbreviated as "PET"), have excellent heat resistance and mechanical properties. These polymers have recently been attracting attention as a recyclable and environmentally suitable material, and have been used in a wide range of applications such as fibers, magnetic tapes, wrapping films, sheets, injection molded articles for various purposes and preforms for producing beverage containers.

Not only having heat resistance and mechanical properties, containers made of a polycondensation polymer should not affect the taste of the contents. Thus, polycondensation polymers used for containers need to be of high quality, have a high polymerization degree, not colored and contain a very small amount of impurities such as acetaldehyde.

Further, in recent years, to meet higher demand due to diversification of uses in addition to demand of high quality, it is attempted to modify properties by compensating for defects of a polymer by adding a different polymer, copolymerizing a different monomer or adding a modifier.

For example, in the case of PET containers, a method in which a poly(ethylene terephthalate/ethylene terephthalamide) copolymer is added in order to increase the crystallization rate to perform high cycle molding or to effectively crystallize the mouth of a molded bottle (see Patent Document 1), a method of adding polyolefin (see Patent Document 2), and a method of melt kneading polyethylene naphthalate to improve the transparency, moldability and heat press resistance of PET (see Patent Document 3) are disclosed.

However, when a different polymer and/or various modifiers are melt kneaded with a polycondensation polymer, thermal decomposition of the polymer occurs, and quality deterioration such as decrease in molecular weight, coloring and accumulation of decomposition products is unavoidable. To omit the melt kneading step, a method of polymerization in which a modifier is previously added to the reaction system for producing a polycondensation polymer is also possible. In most cases, however, when a modifier is present, thermal degradation of the polycondensation polymer occurs at the polymerization temperature, and so it becomes difficult to produce a polymer having a polymerization degree as high as that of a polymer to which no modifier is added. In addition, coloring and accumulation of decomposition products become noticeable, deteriorating the quality of the polymer. Likewise, in the method of copolymerizing a different monomer, since each monomer has a different thermal decomposition temperature, a component having low heat resistance tends to suffer from thermal degradation due to polymerization conditions, and so it becomes difficult to produce a polymer having a polymerization degree as high as that of a polymer to which different monomer is not copolymerized. This method also has a problem that coloring and accumulation of decomposition products become noticeable, deteriorating the quality of the polymer.

As described above, when it is attempted to improve the properties of a polymer by adding a different polymer or a modifier, or by copolymerizing a different monomer, quality of the produced polymer is significantly reduced compared to that of the initial polymer. Thus, improvement in manufacturing technique has been desired.

Further, it is necessary that the method of producing a polymer having improved properties as described above is applicable to production of a wide variety of products in small quantities in order to respond flexibly to diversification of uses. Although batch polymerization is generally used for producing a wide variety of products in small quantities, this method has low productivity and inevitably increases the production cost. On the other hand, continuous polymerization basically enables inexpensive production making use of its merit of the scale. However, when the kind and the amount of modifier or different monomer are changed, operationability becomes low and great loss is generated, which rather increases the production cost. Thus, continuous polymerization is not suitable for producing a wide variety of products in small quantities.

As a technique of continuous melt polymerization, methods of polymerization in which prepolymer is allowed to fall under gravity from the top of a polymerization reactor have been conventionally proposed. For example, as a method of producing polyester, there is a technique in which a PET oligomer having an average polymerization degree of 8 to 12 (corresponding to intrinsic viscosity of 0.1 dl/g or lower) is introduced at 285°C and allowed to fall under gravity along a cylindrically-shaped wire gauze vertically disposed in a reactor to perform polymerization under reduced pressure in the reactor (see Patent Document 4). As a method of producing polyamide or polyester, there is a technique in which polymerization is preformed with allowing polymer to fall under gravity along a linear support vertically disposed in a reactor (see Patent Document 5). However, the studies of the present inventors have revealed that a polymer having a high polymerization degree cannot be prepared by the above-described method alone. And what is worse, oligomer discharged through a perforated plate is expanded too much, polluting the surface of the perforated plate or the wall of the reactor, and these contaminants are modified by decomposition and mixed to the polymer in the course of long time operation, deteriorating the quality of the product. Moreover, even if it is attempted to improve the properties of a polymer by simultaneous polymerization of a different polymer or various modifiers based on the above polymerization methods, a uniform composition or a uniform copolymer cannot be produced because components are easily separated from each other.

[Patent Document 1] JP-A-2003-327812
[Patent Document 2] JP-A-2004-263195
[Patent Document 3] JP-A-2000-17162
[Patent Document 4] JP-B-48-8355
[Patent Document 5] JP-A-53-17569

Disclosure of the Invention

Problems to be Solved by the Invention

An object of the present invention is to produce various high quality polycondensation polymers having a high polymerization degree, not colored and in which the content of impurities generated by thermal decomposition is small, and a molded article thereof by melt polycondensation at low cost, and to provide a method of production applicable to producing a polymer whose properties are improved by copolymerizing a different monomer or adding a different polymer or various modifiers and suitable for producing a wide variety of products in small quantities.

Means for Solving the Problems

The present inventors have conducted intensive studies to solve the aforementioned problems and as a result have developed a method of producing a polycondensation polymer based on a novel principle in which a prepolymer in a molten state is introduced into a polymerization reactor through a feed opening, discharged through holes of a perforated plate and allowed to fall along a support to polymerize under reduced pressure, and have found that melt polymerization at low temperatures which was impossible by conventional known polymerization methods becomes possible.

It has been found that, according to polymerization method in which the perforated plate is designed to have two or more areas and a prepolymer and/or a polymer modifier are introduced to each area, a polymer whose properties are improved by copolymerizing a different monomer or adding a different polymer or various modifiers can be produced, and a high quality polymer having a high polymerization degree, not colored and in which the content of impurities is small and a molded article thereof can be produced at low cost.

It has also been found that all of the above problems can be solved by a method in which the perforated plate is designed to have two or more areas and a polymer polymerized by supplying a prepolymer and/or a polymer modifier to each area is discharged from one or more outlets of the polymerization reactor. In other words, it has been found that regarding a polymer whose problems are improved by copolymerizing a different monomer or adding a different polymer or various modifiers, a high quality polymer having a high polymerization degree, not colored and in which the content of impurities is small and a molded article thereof can be produced at low cost. It has also been found that the method has little loss when product types are changed and is thus suitable for producing a wide variety of products in small quantities, and the present invention has been completed.

Accordingly, the present invention is as follows.

(1) A method for producing a polycondensation polymer, which comprises: introducing a prepolymer of a polycondensation polymer into a polymerization reactor through a feed opening in a molten state; discharging the introduced prepolymer through holes of a perforated plate; and then polycondensing the prepolymer under reduced pressure, while allowing the prepolymer to fall along a support, wherein the perforated plate has two or more areas and polycondensation is performed by introducing a prepolymer and/or a polymer modifier into each of the areas and discharging the introduced prepolymer and/or polymer modifier through holes of each of the areas;

(2) The method for producing a polycondensation polymer according (1), wherein the polymerization reactor has two or more outlets for delivering a produced polymer;

(3) The method for producing a polycondensation polymer according to (1) or (2), wherein the support has two or more areas corresponding to each area of the perforated plate of the polymerization reactor, or/and a polymer is delivered through an outlet divided into two or more areas corresponding to each area of the perforated plate or the support;

(4) The method for producing a polycondensation polymer according to any one of (1) to (3), wherein the prepolymer and/or the polymer modifier are reacted with a molecular weight modifier at a step prior to introducing the prepolymer and/or the polymer modifier into the polymerization reactor;

(5) The method for producing a polycondensation polymer according to any one of (1) to (4), wherein the polycondensation polymer is a polyester resin;

(6) A polycondensation polymer produced by the method for producing a polycondensation polymer according to any one of (1) to (5), having a molecular weight distribution represented by Mw/Mn of 2.0 or higher;

(7) A polycondensation polymer produced by the method for producing a polycondensation polymer according to any one of (1) to (5), which is a polymer alloy;

(8) A polycondensation polymer produced by the method for producing a polycondensation polymer according to any one of (1) to (5), which is a polyester elastomer;

(9) A method for producing a molded article which comprises: transferring a polymer produced by the method for producing a polycondensation polymer according to any one of (1) to (5) in a molten state to a molding machine and molding the same;

(10) An apparatus for producing a polycondensation polymer comprising a polymerization reactor having at least a feed opening, a perforated plate, a support and an outlet as constituents, wherein the perforated plate has two or more areas, and a prepolymer and/or a polymer modifier is introduced into each of the areas, the introduced prepolymer and/or polymer modifier is discharged through holes of each of the areas, and polycondensation is performed under reduced pressure while allowing the prepolymer and/or polymer modifier to fall along the support;

(11) The apparatus for producing a polycondensation polymer according to (10), wherein the polymerization reactor has two or more outlets; and

(12) The apparatus for producing a polycondensation polymer according to (10) or (11), wherein the support of the polymerization reactor has two or more areas corresponding to each area of the perforated plate, or/and the outlet is divided into two or more areas corresponding to each area of the perforated plate or the support.

Advantages of the Invention

When the method of production of the present invention is employed, a high quality polymer having a high polymerization degree, not colored and in which the content of impurities generated by thermal decomposition is small and a molded article thereof can be produced by melt polycondensation at low cost. In particular, when producing a polymer whose properties are improved by copolymerizing a different monomer or adding a different polymer or various modifiers, a high quality polymer and a molded article thereof can be produced. In addition, the present invention is suitable for producing a wide variety of products in small quantities.

Best Mode for Carrying Out the Invention

The present invention is described in detail below in the order of (A) principles of polymerization method, (B) description of polycondensation polymer, (C) description of polymer modifier, (D) description of polymerization reactor, (E) description of polymerization method, (F) description of molding method and (G) description of produced polymer.

(A) Principles of polymerization method:

The polymerization method of the present invention comprises introducing a prepolymer polymerizable by thermal melt polycondensation in a molten state into a polymerization reactor through a feed opening, discharging the prepolymer through holes of a perforated plate and polymerizing the prepolymer by allowing it to fall along a support under gravity under reduced pressure.

As described later, properties of prepolymer, the construction of the polymerization reactor and the polymerization method are designed so as to meet appropriate conditions. Such settings produce a great amount of bubbles in the prepolymer falling along a support, and the polymer rolls down in the form of bubble balls or agglomerates, rapidly moving to the lower area of the polymerization reactor in the course of polymerization.

As a result, the contact area between the polymer and the gas phase is significantly increased and the action of mixing the polymer is greatly enhanced. Consequently, by-products of polycondensation (ethylene glycol in the case of PET) or impurities generated by thermal decomposition in polymerization (acetaldehyde in the case of PET) can be effectively removed from the prepolymer. Further, in addition to significant increase in the polymerization velocity, a high quality polymer containing a very small amount of impurities can be produced.

In consequence, not only the polymerization velocity is greatly improved compared to that in the conventional melt polymerization techniques but also a high quality polymer containing a very small amount of remaining impurities can be produced at low polymerization temperatures, which was impossible by conventional known polymerization reactors.

The present inventors have conducted further studies and designed a mechanism of polymerization in which a perforated plate of the polymerization reactor is separated into two or more areas and a prepolymer and/or a polymer modifier is introduced into each area; or alternatively/further, a prepolymer and/or a polymer modifier is introduced to each area with changing the supply amount over time.

As a result of their studies, it has been found that when streams of prepolymer introduced through each area of the perforated plate are combined on the support and polymerization is performed with allowing the prepolymer to fall, a polymer homogeneously mixed and uniform in quality can be produced at low temperatures, which was impossible by conventionally known polymerization reactors or kneaders, despite the absence of a power driven stirring mechanism such as stirring blade. This has made it possible to produce a high quality polymer at low cost, whose properties are improved by copolymerizing a different monomer or adding a different polymer or various modifiers.

It is of course possible to introduce the same kind of prepolymer through each area of the perforated plate. Applications are also available such as adjusting the polymerization velocity or the polymerization degree of the polymer by setting the supply amount per area as desired, and making molecular weight distribution broader to produce a polymer having improved melt flowability.

The present inventors have conducted further studies and designed a technique in which a perforated plate of the polymerization reactor is separated into two or more areas, a prepolymer and/or a polymer modifier is introduced into each area, and two or more outlets are formed in the polymerization reactor to discharge the polymer.

As a result of their studies, it has been found that when polymerization is performed with allowing a prepolymer to fall without combining the streams of the prepolymer introduced through each area of a perforated plate based on the structure and the position of the support, a plurality of polycondensation polymers can be simultaneously produced in one polymerization reactor. It has also been found that when streams of prepolymer introduced through each area of a perforated plate are combined and polymerization is performed with allowing the prepolymer to fall, a polymer homogeneously mixed and uniform in quality can be obtained.

As a result, it has become possible to produce a high quality polymer whose properties are improved by copolymerizing a different monomer or adding a different polymer or various modifiers at low cost, and to produce a wide variety of polymers in small quantities with reduced loss by controlling the streams of the prepolymer falling through the polymerization reactor.

It is of curse possible to introduce the same kind of prepolymer through each area of the perforated plate. The production amount in each area can be adjusted by setting the supply amount per area as desired. A plurality of polymers having a different polymerization degree can be simultaneously produced. A wide range of applications such as simultaneous production of a plurality of polymers having a different polymerization degree by supplying prepolymers which are the same except for the polymerization degree through each area.

(B) Description of polycondensation polymer:

The polycondensation polymer in the present invention means a polymer having a structure in which at least one kind of monomer containing two or more functional groups capable of condensing is polymerized by bonding of the functional group. The above monomer may be those in which such functional group is directly bonded to an aliphatic hydrocarbon group or those in which such functional group is directly bonded to an aromatic hydrocarbon group.

Specific examples of polycondensation polymer include polymers having a structure in which aliphatic hydrocarbon groups are polymerized via the fictional group, such as aliphatic polyester, aliphatic polyamide and aliphatic polycarbonate; polymers having a structure in which aliphatic hydrocarbon groups and aromatic hydrocarbon groups are polymerized via the fictional group, such as aliphatic aromatic polyester, aliphatic aromatic polyamide and aliphatic aromatic polycarbonate; and polymers having a structure in which aromatic hydrocarbon groups are polymerized via the fictional group, such as aromatic polyester and aromatic polyamide.

The above-described polycondensation polymer may be a homopolymer or a copolymer. The polycondensation polymer may also be a copolymer in which different bonds such as an ester bond, an amide bond and a carbonate bond are present randomly or in blocks. Specific examples of such copolymers include polyester carbonate and polyester amide.

The prepolymer refers to a polymer at an initial stage of polymerization having polymerization degree lower than the produced polymer product. The prepolymer may contain an oligomer or a monomer, and is prepolymerized to the desired polymerization degree using a conventionally known apparatus such as a vertical agitating polymerization reactor, a horizontal agitating polymerization reactor having a uniaxial or biaxial agitation blade, a natural falling thin-film polymerization reactor having trays, a thin-film polymerization reactor involving natural falling on a sloped plane and a wetted-wall column.

For example, a prepolymer of polyester is produced by polycondensation of a compound containing a hydroxyl group and a compound containing a carboxyl group or a compound having lower alcohol ester of a carboxyl group. A prepolymer of polyamide is produced by polycondensation of a compound containing an amino group and a compound containing a carboxyl group. A prepolymer of polycarbonate is produced by polycondensation of a compound having an aryloxy group or an alkoxy group on both sides of a carbonyl group and a compound having a hydroxyl group.

More specifically, a prepolymer of aliphatic polyester is produced by polycondensation of a monomer in which a hydroxyl group is directly bonded to an aliphatic hydrocarbon group having 1 to 30 carbon atoms, such as ethylene glycol, and a monomer in which a carboxyl group is directly bonded to an aliphatic hydrocarbon group having 1 to 30 carbon atoms, such as adipic acid, or a monomer in which a hydroxyl group and a carboxyl group are directly bonded to an aliphatic hydrocarbon group having 1 to 30 carbon atoms, such as glycolic acid.

A prepolymer of aliphatic aromatic polyester is produced by polycondensation of a monomer in which a hydroxyl group is directly bonded to an aliphatic hydrocarbon group having 1 to 30 carbon groups, such as ethylene glycol, 1,3-propanediol, 1,3-butanediol, 1,4-butanediol, neopentyl glycol, 1,6-hexamethylene gloycol, 1,4-cyclohexanediol or 1,4-cyclohexanedimethanol and a monomer in which a carboxyl group is directly bonded to an aromatic hydrocarbon group having 6 to 30 carbon atoms, such as terephthalic acid, isophthalic acid, oxalic acid, succinic acid, adipic acid, dodecane diacid, fumaric acid, maleic acid, 1,4-cyclohexanedicarboxylic acid, 5-sodium sulfoisophthalic acid, 3,5-dicarboxylic acid benzenesulfonic acid tetramethylphosphonium salt, 1,4-cyclohexanedicarboxylic acid or 2,6-naphthalenedicarboxylic acid, or with these monomers in which the carboxyl group is esterified by lower alcohol.

A prepolymer of aromatic polyester is produced by polycondensation of a monomer in which a hydroxyl group is directly bonded to an aromatic hydrocarbon group having 6 to 30 carbon atoms, such as bisphenol A and a monomer in which a carboxyl group is directly bonded to an aromatic hydrocarbon group having 6 to 30 carbon atoms such as terephthalic acid.

A prepolymer of aliphatic polyamide is produced by polycondensation of a monomer in which an amino group is directly bonded to an aliphatic hydrocarbon group having 2 to 30 carbon atoms such as hexamethylenediamine and a monomer in which a carboxyl group is directly bonded to a aliphatic hydrocarbon group having 1 to 30 carbon atoms such as adipic acid.

A prepolymer of aliphatic aromatic polyamide is produced by polycondensation of a monomer in which an amino group is directly bonded to an aliphatic hydrocarbon group having 2 to 30 carbon atoms such as hexamethylenediamine and a monomer in which a carboxyl group is directly bonded to an aromatic hydrocarbon group having 6 to 30 carbon atoms such as terephthalic acid.

A prepolymer of aromatic polyamide is produced by polycondensation of a monomer in which an amino group is directly bonded to an aromatic hydrocarbon group having 6 to 30 carbon atoms such as paraphenylenediamine and a monomer in which a carboxyl group is directly bonded to an aromatic hydrocarbon group having 6 to 30 carbon atoms such as terephthalic, acid.

A prepolymer of aliphatic polycarbonate is produced by polycondensation of a monomer in which a hydroxyl group is directly bonded to an aliphatic hydrocarbon group having 2 to 30 carbon atoms such as 1,6-hexanediol and a monomer in which a phenoxy group is bonded to both sides of a carboxyl group such as diphenyl carbonate.

A prepolymer of an aliphatic aromatic polycarbonate is produced by polycondensation of a monomer in which a hydroxyl group is directly bonded to an aliphatic hydrocarbon group having 2 to 30 carbon atoms such as 1,6-hexanediol, a monomer in which a hydroxyl group is directly bonded to an aromatic hydrocarbon group having 6 to 30 carbon atoms such as bisphenol A and a monomer in which a phenoxy group is bonded to both sides of a carboxyl group such as diphenyl carbonate.

Referring to all of the above prepolymers, examples of prepolymers also include those obtained by previously copolymerizing the prepolymer with polyalkylene glycol such as polyethylene glycol, polypropylene glycol or polytetramethylene glycol.

For details of the method of producing the above-described prepolymers, "Polymer Synthesis, vol. 1, second edition", 1992 (Academic Press, Inc.), for example, can be referred to.

The polymerization degree of the prepolymer suitable for the present invention can be defined based on the melt viscosity obtained in evaluation under a condition of a shear rate of 1000 (sec$^{-1}$) at a temperature at which polymerization is performed in the polymerization reactor of the present invention, and is preferably in the range of 60 to 100000 (poise). When the melt viscosity is set to 60 (poise) or higher, intensive foaming and scattering of prepolymer discharged through holes of the perforated plate of the polymerization reactor can be prevented. On the other hand, when the melt viscosity is set to 100000 (poise) or lower, polymerization proceeds rapidly because reaction by-products can be effectively removed from the system. The melt viscosity is in the range of preferably 100 to 50000 (poise), more preferably 200 to 10000 (poise), particularly preferably 300 to 5000 (poise). A prepolymer having such a relatively high polymerization degree is preferred in the present invention because polymerization can be performed with a great amount of bubbles in the polymer and as a result, the polymerization velocity can be greatly improved.

(C) Description of polymer modifier:

The kind of polymer modifier is not particularly limited, and the polymer modifier may be liquid at a temperature below the polymerization temperature of the polymer or may include solid fine particles at a temperature below the polymerization temperature of the polymer. The polymer modifier may be reactive with a polymer to form a chemical bond, or may not be reactive with the polymer. The modifier may have catalytic action to promote the polycondensation reaction or have action to inhibit the activity of a polymerization catalyst contained in the prepolymer.

Specific examples thereof include polyalkylene glycols such as polyethylene glycol, polypropylene glycol and polytetramethylene glycol which are bondable to polycondensation polymer and offer easiness in dyeing, flexibility, sound controlling properties and antistatic properties; polyolefins such as polyethylene and polypropylene which offer a crystallization promoting effect, sliding properties and high melt flowability and these polyolefins whose terminal group is modified so as to be bondable to polycondensation polymer; fine particles of inorganic or organic substances such as fine particles of talc, silica or metal oxide or powder of multilayer organic compound which offer mechanical properties, improvement in the gloss of molded articles, gas barrier properties, oxygen absorption, antibacterial activity and flame retardance and these particles into which a functional group bondable to polycondensation polymer is introduced; metal compounds containing titanium, germanium, antimony, tin, aluminum or cobalt which offer polymerization catalytic action and hue improvement action; compounds containing phosphor, sulfur or halogen which inhibit the activity of a polymerization catalyst contained in the prepolymer to suppress thermal decomposition or generation of oligomers; and other known additives such as delustering agents, heat stabilizers, flame retardants, antistatic agents, dyes, pigments, antifoaming agents, orthochromatic agents, antioxidants, ultraviolet absorbers, crystal nucleators, brightening agents and scavengers for impurities and residual monomers.

These modifiers may be introduced as is or after mixing with a prepolymer or with oil or polyethylene which facilitate dispersion through any area of the perforated plate. They may be individually introduced through each area or in combination through an identical area.

(D) Description of polymerization reactor:

Referring now to the polymerization reactor of the present invention, the above-described prepolymer is introduced in a molten state into the polymerization reactor, discharged through holes of a perforated plate and then melt polycondensation is performed under reduced pressure while allowing the prepolymer to fall along a support.

(D-1) perforated plate:

The perforated plate means a plate having multiple holes. Use of a perforated plate prevents uneven flow and local residence of a prepolymer in a reactor, yielding a high quality, homogeneous polymer. The perforated plate has two or more areas and any prepolymer and/or polymer modifier may be introduced in any amount through each area to perform polymerization.

Referring to the structure of the perforated plate, the thickness of the plate is not particularly limited, but is usually 0.1 to 300 mm, preferably 1 to 200 mm, more preferably 5 to 150 mm. The perforated plate should bear the pressure in the molten prepolymer supply chamber. And in the case that the support in the polymerization chamber is fixed to the perforated plate, the plate should have strength sufficient for supporting the weight of the support and the falling molten prepolymer. A preferred mode may be a perforated plate reinforced by ribs or the like.

The shape of holes on the perforated plate is usually selected from a circle, an ellipse, a triangle, a slit, a polygon and a star. The hole has a cross section area of usually 0.01 to 100 $cm^2$, preferably 0.05 to 10 $cm^2$, and particularly preferably 0.1 to 5 $cm^2$. The shape and the cross section may be changed in each area depending on the kind of supplied materials. In addition, a nozzle or the like may be connected to the hole.

The distance between holes, which is the distance between the centers of holes, is usually 1 to 500 mm, preferably 10 to 100 mm. The hole on the perforated plate may be a through hole or a hole with a tube. The hole may also be a tapered hole. It is preferred that the size and the shape of the hole is determined so that the pressure loss when the prepolymer passes through the perforated plate is 0.1 to 50 $kg/cm^2$. Referring to the position of holes belonging to each area, they may be randomly positioned, alternately or periodically positioned in the radius or circumferential direction of concentric circles, alternately or periodically positioned in a lattice pattern, collectively positioned in each area, or positioned in plural groups in each area, depending on the purpose.

The number of holes on a perforated plate is not particularly limited, and is different depending on conditions such as reaction temperature or pressure, the amount of catalyst and the range of molecular weight of materials to be polymerized. Typically, when a polymer is produced at a rate of 100 kg/hr, for example, the necessary number of holes is 10 to $10^5$, more preferably 50 to $10^4$, further preferably $10^2$ to $10^3$. The number of areas is not particularly limited and is usually 2 to 100, more preferably 2 to 50, further preferably 2 to 10 in view of the equipment cost. The number of holes belonging to each area is not particularly limited and is usually 1 to $10^4$, more preferably 1 to $10^3$, further preferably 1 to $10^2$ in view of the equipment cost. The number of holes belonging to each area may be the same or different.

Typically, the material of the perforated plate is preferably metal such as stainless steel, carbon steel, hastelloy, nickel, titanium, chrome and other types of alloys.

Examples of methods of discharging a prepolymer through the above perforated plate include a method of allowing a prepolymer to fall through a liquid head or by its own weight and a method of applying pressure and extruding using a pump or the like. To suppress fluctuation in the amount of falling prepolymer, a method of extruding prepolymer using a pump having measuring ability such as a gear pump, is preferred.

A filter is preferably provided in a channel in the upstream of the perforated plate. Such filter can eliminate foreign substances, which block hole on the perforated plate. A filter which can eliminate a foreign substance greater than the diameter of holes on the perforated plate and which is not broken by passing of prepolymer is appropriately selected.

(D-2) support:

The prepolymer discharged through holes of the perforated plate falls down along a support. Examples of specific structures of a support include a "wire form", a "chain form" or a "lattice (wire gauze) form" in which wire form materials are combined, a "space lattice form" in which wire form materials are connected in a shape like a jungle gym, a flat or curved "thin plate form" and a "perforated plate" form. In addition, in order to efficiently remove reaction by-product or impurities generated by thermal decomposition during polymerization, it is preferred that the surface area of falling resin is increased and agitation and surface renewal are actively induced by allowing a prepolymer to fall along a support having asperities in the direction where the prepolymer falls. A support having a structure that impedes the falling of resin, e.g., a "wire form having asperities in the direction where the resin falls" is also preferred. These supports may be used in combination or appropriately positioned depending on the kind of materials supplied from each area of the perforated plate. The support may be positioned so that streams of materials supplied from each area of the perforated plate are not combined on the support, streams of materials supplied from each area of the perforated plate are combined on the support, or part of the streams of materials supplied from each area of the perforated plate is combined on the support depending on the purpose.

The term "wire form" means a material having an extremely great ratio of the mean length of the outer circumferences of cross sections to the length in the direction vertical to the cross sections. The area of the cross section is not particularly limited, but it is usually $10^{-3}$ to $10^2$ cm$^2$, preferably $10^{-3}$ to $10^1$ cm$^2$, and particularly preferably $10^{-2}$ to 1 cm$^2$. The shape of the cross section is not particularly limited, but it is usually selected from a circle, an ellipse, a triangle, a quadrangle, a polygon and a star. The cross sectional shape may be the same or different in the length direction. The wire may also be a hollow wire. The wires include a single wire and a combined wire obtained by twisting multiple wires. The surface of the wire may be smooth, uneven or may have projections in some part.

The term "chain form" means a material obtained by connecting rings made of the above-described wire form material. The shape of the ring may be a circle, an ellipse, a rectangle or a square. The rings may be connected one-dimensionally, two-dimensionally or three-dimensionally.

The term "lattice form (wire gauze form)" means a material formed by combining the above-described wire form material in a lattice form. Wires to be combined may include both a linear wire and a curved wire. The combination angle may be selected as desired. When a lattice-form (wire gauze form) is projected from a vertical direction against the plane, the area ratio of the material to the space is not particularly limited. However, the area ratio is usually between 1:0.5 to 1:1000, preferably between 1:1 to 1:500, particularly preferably between 1:5 to 1:100. The area ratio is preferably equal in the horizontal direction. The area ratio is preferably equal or the proportion of the space may be increased in the lower part in the vertical direction.

The term "space lattice form" means a material obtained by three-dimensionally combining wire-form materials in a space lattice form like a so-called jungle gym. Wires to be combined may be both a linear wire and a curved wire. The combination angle may be selected as desired.

The term "wire form having asperities in the direction where a polymer falls" means a material obtained by attaching bars having a circular or polygonal cross-section perpendicularly to a wire, or a material obtained by attaching disks or cylinders to a wire. The step between the resulting recess and protrusion is preferably 5 mm or greater. Specific examples thereof may be a disk-attached wire in which a wire pierces through the center of disks having a diameter 5 mm or more greater and 100 mm or smaller than the diameter of the wire, having a thickness of 1 to 50 mm with an interval of the disks of 1 to 500 mm.

The ratio of the volume of the support installed in the reactor to the internal volume of the reactor is not particularly limited. The ratio is usually 1:0.5 to 1:$10^7$, preferably 1:10 to 1:$10^6$, particularly preferably 1:50 to 1:$10^5$. The ratio of the volume of the support to the internal volume of the reactor is preferably equal in the horizontal direction. The ratio is preferably equal or the proportion of the internal volume of the reactor may be increased in the lower part in the vertical direction.

A single support or multiple supports may be provided, and they may be appropriately selected depending on the shape. In the case of a "wire form" support or a "chain form" support, the number of supports is usually 1 to $10^5$, preferably 3 to $10^4$. In the case of a "lattice form", "two dimensionally-connected chain-form", "thin plate form" or "perforated plate form" support, the number of supports is usually 1 to $10^4$, preferably 2 to $10^3$. In the case of a "three-dimensionally connected chain-form" support or a "space lattice form" support, whether a single support is used or a support is divided to form multiple supports may be appropriately selected depending on the size of the apparatus, the space where the support is installed, and the like.

When multiple supports are used, it is preferable that a spacer or the like be appropriately used so that the supports do not come into contact with one another.

The material of the support is not particularly limited, and usually selected from stainless steel, carbon steel, hastelloy and titanium. The wire may be subjected to surface treatment such as plating, lining, passivation or acid cleaning if necessary.

In the present invention, a prepolymer is usually supplied to a single support through one or more holes of a perforated plate, and the number of holes can be appropriately selected depending on the shape of the support. Further, a prepolymer that has passed through a hole may be allowed to fall along a plurality of supports. A prepolymer may be supplied to a support through holes of plural areas of a perforated plate, or may be supplied to two or more supports through holes of one area of the perforated plate depending on the purpose.

The position of the support is not particularly limited as long as the prepolymer can fall along the support. The method of attaching the support to the perforated plate may be accordingly selected from the case in which the support is disposed so as to pierce through holes of the perforated plate and the case in which the support is disposed below holes of the perforated plate so as not to pierce through the holes.

The falling length along the support of the prepolymer that has passed through holes is preferably 0.5 to 50 m, more preferably 1 to 20 m, further preferably 2 to 10 m.

(D-3) outlet:

The polymerization reactor may have one outlet or two or more outlets. When two or more outlets are provided, a polymer falling along two or more supports may be discharged from one outlet, a polymer falling along one support may be discharged from two or more outlets or a polymer falling along two or more supports may be discharged from two or more outlets.

(D-4) heating apparatus:

The polymerization temperature may be appropriately adjusted by controlling the temperature of a heater or a heating jacket covering the support disposed along the wall of the polymerization reactor, or by putting a heater or a heating medium inside the support and controlling their temperature.

(D-5) decompressor:

The degree of reduced pressure in the polymerization reactor may be appropriately set by controlling the degree of decompression by connecting a vent port provided at any position of the polymerization reactor to a vacuum line. Polymerization by-products, impurities generated by thermal decomposition in polymerization and inert gas introduced into the polymerization reactor in small amounts as needed are discharged from the vent port.

(D-6) inert gas feeding apparatus:

When inert gas is directly introduced into the polymerization reactor, the gas may be introduced from a introducing port provided at any position of the polymerization reactor. It is desired that the inert gas introducing port is positioned away from the perforated plate but close to the discharge port of the polymer. It is also desired that the feed port is positioned away from the vent port.

Alternatively, a method of allowing inert gas to be absorbed to and/or contained in a prepolymer in advance is also available. In that case, an inert gas feeding apparatus is provided at the upstream of the polymerization reactor of the present invention.

For example, a method using a known absorption device as an inert gas supply apparatus such as a packed tower-type absorption device, a plate-type absorption device or a spray tower-type absorption device described in Kagaku Sochi Sekkei/Sosa Series No.2, Kaitei Gasu Kyushu, pp. 49 to 54 (March 15, 1981, published by Kagaku Kogyo Co., Ltd.), and a method of pressing inert gas into a tube transferring a prepolymer may be employed. Most preferred is a method of using an apparatus for absorption of inert gas while allowing a prepolymer to fall along a support in an inert gas atmosphere. In this method, inert gas having a pressure higher than that in a polymerization reactor is introduced into the apparatus for absorption of inert gas. The pressure in this case is preferably between 0.01 to 1 MPa, more preferably between 0.05 to 0.5 MPa, further preferably between 0.1 to 0.2 MPa.

(E) Description of polymerization method:

The present inventors have found that by polymerizing a prepolymer having a melt viscosity that is within the aforementioned range using the aforementioned polymerization reactor at a polymerization temperature and a degree of reduce pressure described below, scattering of prepolymer due to intensive foaming which occurs immediately below the perforated plate can be prevented, and deterioration of the quality of the polymer due to contamination of the nozzle surface and walls of the polymerization reactor can be prevented, and in addition, the polymer falling along the support contains a large amount of bubbles and the surface area of the polymer increases and the polymer rolls down along the support in the form of bubbles. At the same time, a significant increase in the polymerization velocity and improvement of the hue of the polymer have been confirmed.

It is considered that such significant increase in the polymerization velocity is caused by combined actions of a surface area expansion effect due to a large amount of bubbles contained and a surface renewal effect due to plasticizing action of bubbles. Furthermore, the plasticizing action of bubbles has also made it possible to improve the polymer hue due to a shortened residence time of the polymer in the polymerization reactor and to easily discharge a polymer having a high polymerization degree and a high viscosity from the polymerization reactor.

In order to obtain a high quality, high polymerization degree polymer, conventional gravity drop type thin-film melt polymerization reactors such as a wetted-wall column are designed to polymerize a prepolymer in an initial stage of a reaction having a polymerization degree extremely lower than that of the prepolymer used in the method of the present invention at a higher temperature in a shorter residence time compared to the method of the present invention. In conventional technical knowledge, when melt polymerization of a prepolymer having a high polymerization degree as in the method of the present invention is continuously performed, coloring of the prepolymer progresses and the residence time of fall through the polymerization reactor is increased. Thus, production of high quality polymer was inconceivable.

In this situation, the range of the melt viscosity of the prepolymer is set relatively high in the present invention contrary to conventional technical knowledge as described above. Further, as described later, the polymerization temperature is set relatively low contrary to conventional technical knowledge. The present inventors have found that the above settings enable control of the foaming condition of a polymer, and found a surprising effect that the polymerization velocity can be significantly increased and a polymer having a high polymerization degree can be easily discharged at low temperatures.

(E-1) polymerization temperature:

The reaction temperature of polycondensation is preferably (crystalline melting point -10°C) or higher and (crystalline melting point +60°C) or lower of the polycondensation polymer. By setting the reaction temperature to (crystalline melting point -10°C) or higher, solidification of the reactant and extension of reaction time can be prevented. By setting the reaction temperature to (crystalline melting point +60°C) or lower, thermal decomposition can be prevented and a polymer having excellent hue can be produced. The reaction temperature is more preferably (crystalline melting point -5°C) or higher and (crystalline melting point +40°C) or lower, further preferably crystalline melting point or higher and (crystalline melting point +30°C) or lower. Such relatively low reaction temperature is preferred in the present invention because the polymer tends to contain a large amount of bubbles and as a result, the polymerization velocity can be greatly improved.

Herein, the crystalline melting point means a peak temperature at an endothermic peak derived from melting of crystal measured using Pyris 1 DSC (input-compensating differential scanning calorimeter) manufactured by Perkin Elmer, Inc. under the conditions described below. The peak temperature is determined using attached analysis software.

Measurement temperature: 0 to 300°C
Temperature rising rate: 10°C/min

(E-2) polymerization pressure:

It is necessary to perform the melt polycondensation reaction of the present invention under reduced pressure so that the polymer contains a large amount of bubbles. The degree of reduced pressure is accordingly adjusted based on the sublimation state of prepolymer or products of the polycondensation reaction or the reaction rate. The degree of reduced pressure is preferably 50000 Pa or lower, more preferably 10000 Pa or lower, further preferably 1000 Pa or lower, and particularly preferably 500 Pa or lower. The lower limit is not particularly determined, but in view of scale of equipment for reducing pressure in the polymerization reactor, the pressure is preferably 0.1 Pa or higher.

Moreover, it is also preferable to introduce a small amount of inert gas which does not affect the polycondensation reaction into the polymerization reactor under reduced pressure to remove by-products generated as a result of polymerization or impurities generated by thermal decomposition in polymerization together with the inert gas.

It has been understood that inert gas is introduced into a polymerization reactor to decrease the partial pressure of by-products generated as a result of polymerization and to shift equilibrium so as to promote the reaction effectively. In the present invention, however, the amount of inert gas to be introduced is extremely small, and thus, the effect of increasing the polymerization velocity by the decreased partial pressure can hardly be expected. Thus, the above role of inert gas cannot be explained based on conventional knowledge.

The studies of the present inventors have revealed that introduction of inert gas into a polymerization reactor causes intensive foaming of prepolymer falling along a support in a molten state, and the surface area of the prepolymer is significantly increased and the surface renewal state is greatly improved. Although the principle is unknown, it is assumed that the change in the inside and the surface state of the prepolymer causes a significant increase in the polymerization velocity.

Gas that does not have adverse effects such as coloring, denaturation and decomposition on resin is suitable as inert gas to be introduced, and examples of such gas include nitrogen, argon, helium, carbon dioxide, lower hydrocarbon gas and a mixed gas thereof. More preferred inert gas is nitrogen, argon, helium or carbon dioxide, and of these, nitrogen is particularly preferred because it is readily available.

In the present invention, the amount of inert gas introduced may be extremely small, and is preferably 0.05 to 100 mg per 1 g of polymer discharged from the polymerization reactor. When the amount of inert gas is 0.05 mg or more per 1 g of polymer discharged from the polymerization reactor, foaming of resin is sufficient and the effect of improving the polymerization degree increases. On the other hand, when the amount of inert gas is 100 mg or less, the degree of reduced pressure can be easily increased. The amount of inert gas is more preferably 0.1 to 50 mg, particularly preferably 0.2 to 10 mg per 1 g of polymer discharged from the polymerization reactor.

Examples of methods of introducing inert gas include a method of directly introducing inert gas into a polymerization reactor, a method of previously allowing inert gas to be absorbed to and/or contained in a prepolymer and releasing the absorbed and/or contained gas from the prepolymer under reduced pressure so as to introduce it into a polymerization reactor, and a method of using these methods in combination. The term "absorb" used herein means that inert gas is dissolved in a polymer and not in the form of air bubbles, and the term "contain" means that inert gas is present in the form of air bubbles. When the inert gas is present in the form of air bubbles, the smaller the size of the air bubble, the better. The average bubble diameter is preferably 5 mm or less, and more preferably 2 mm or less.

(E-3) polymerization time:

The polymerization time means the total of the time for falling of a polymer along the support and the time of residence of the polymer at the bottom of the polymerization reactor. The polymerization time is preferably 10 seconds to 100 hours, more preferably 1 minute to 10 hours, further preferably 5 minutes to 5 hours, particularly preferably 20 minutes to 3 hours.

In the present invention, a method of discharging all the polymer polymerized from a prepolymer from the polymerization reactor in a single pass, or a method in which part of the produced polymer is circulated and reintroduced into the polymerization reactor may be employed, and the method of discharging all the polymer in a single pass is preferred. In the case of circulation, it is preferred that the temperature is lowered and the residence time is shortened at the bottom or in the circulation line of the polymerization reactor in order to suppress thermal decomposition in these areas.

(E-4) polymerization velocity:

The polymerization reactor of the present invention has a characteristic that the polymerization ability can be increased in proportion to the number of supports disposed in the polymerization reactor in the case of a wire form support and thus scale up can be easily designed.

In the case of a wire form support, the flow rate of prepolymer per support is preferably $10^{-2}$ to $10^{2}$l/hr. When the flow rate is within this range, sufficient production capacity is assured and the polymerization velocity can be significantly increased. The flow rate is more preferably in the range of 0.1 to 50l/hr.

In the case of a support in which wires are combined such as a lattice form (wire gauze form) support, the flow rate of prepolymer is in the range of preferably $10^{-2}$ to $10^{2}$l/hr, more preferably 0.1 to 50l/hr per wire structure in the vertical direction constituting the support.

In the case of a thin plate form support which does not have a wire combined structure, the flow rate of prepolymer is in the range of preferably $10^{-2}$ to $10^2$l/hr, more preferably 0.1 to 50l/hr per hole of a perforated plate through which a prepolymer is supplied to the support.

(E-5) molecular weight modifier:

In the present invention, a prepolymer may be reacted with any amount of a molecular weight modifier according to need in any step prior to introducing the prepolymer into the polymerization reactor of the present invention. The present inventors have found that the falling speed of the prepolymer along the support can be drastically changed by changing the molecular weight of the prepolymer introduced into the polymerization reactor of the present invention and that due to such change, the residence time in the polymerization reactor can be controlled, and qualities such as polymerization degree of the produced resin and production quantities thereof can be easily and extensively controlled.

In addition, when, for example, a prepolymer is transferred to the polymerization reactor of the present invention from the prepolymer preparation process, by making the transfer pipe branched so that the prepolymer can be introduced into each area of the perforated plate of the polymerization reactor of the present invention and introducing a molecular weight modifier into the branched pipe leading to an area of the perforated plate, a plurality of polymers having a different polymerization degree can be produced simultaneously and a polymer having a large molecular weight distribution can be produced as described later.

As a molecular weight modifier, a molecular weight reducing agent or a molecular weight increasing agent may be used. In the present invention, use of the molecular weight modifier enables extensive control of qualities such as polymerization degree and production quantities of polycondensation polymer, which was impossible in the conventional polymerization process.

For example, when a molecular weight reducing agent is used, the polymerization degree of the polycondensation polymer produced in the polymerization reactor of the present invention can be significantly reduced only by adding a relatively small amount of a molecular weight reducing agent. This is because increase in the falling speed of the prepolymer along the support produces an effect of shortening of the reaction time, in addition to the effect by the molecular weight reducing agent itself. The fact that the polymerization degree of the produced polycondensation polymer can be significantly reduced means that the production quantities can be significantly reduced.

On the contrary, because only the effect by the molecular weight reducing agent is available in conventional polymerization methods, the polymerization degree of the polycondensation polymer is reduced only to an extent corresponding to the amount added of the molecular weight reducing agent. For this reason, a large amount of molecular weight reducing agent must be added to extensively adjust the molecular weight, and this involves problems of operation, costs and the quality of products. On the other hand, when a molecular weight increasing agent is used, the polymerization degree of the polycondensation polymer produced in the polymerization reactor of the present invention can be significantly increased only by adding a relatively small amount of molecular weight increasing agent. This is because lowering of the falling speed of the prepolymer along the support produces an effect of extension of the reaction time, in addition to the effect by the molecular weight increasing agent itself. The fact that the polymerization degree of the produced polycondensation polymer can be significantly increased means that the production quantities can be significantly increased. On the contrary, because only the effect by the molecular weight increasing agent is available in conventional polymerization methods, the polymerization degree of the polycondensation polymer is increased only to an extent corresponding to the amount added of the molecular weight increasing agent. For this reason, a large amount of molecular weight increasing agent must be added to extensively adjust the molecular weight, and this involves problems of operation, costs and the quality of products.

In addition, when the molecular weight of the prepolymer supplied from the prepolymer preparation process fluctuates, the fluctuation is to be detected, and based on the detection result, a molecular weight modifier may be added to the prepolymer at a stage before introducing the prepolymer into the polymerization reactor. By this, fluctuation in the molecular weight is diminished and a prepolymer with little fluctuation in the molecular weight can be introduced into the polymerization reactor.

The molecular weight modifier may be allowed to react with the prepolymer in any step before introducing the prepolymer into the polymerization reactor. The reaction may be performed in a separate reactor. Alternatively, a molecular weight modifier may be introduced into a prepolymer transfer pipe to induce a reaction in the pipe. A method of facilitating mixing and reaction of a molecular weight modifier using a kneader having a driving member such as extruder or a static mixer is also preferred.

As a molecular weight reducing agent, a known agent used for depolymerization or for reducing molecular weight of polymer may be appropriately used depending on the kind of polymer. Starting monomers described in the above (B), prepolymers having a lower molecular weight or compounds simultaneously produced in the polycondensation reaction may also be used as a molecular weight reducing agent.

For example, when the polycondensation polymer is polyester resin, useful is a compound or a mixture of two or more compounds selected from compounds in which 2 or less hydroxyl groups are directly bonded to an aliphatic hydrocarbon group having 1 to 30 carbon atoms, such as ethylene glycol, 1,3-propanediol, 1,4-butanediol, neopentyl glycol, 1,6-hexamethylene glycol, 1,4-cyclohexanediol, methanol, ethanol, propanol, butanol and benzyl alcohol; alkylene glycols such as diethylene glycol, triethylene glycol, tetraethylene glycol, dipropylene glycol and tripropylene glycol; water; compounds in which 2 or less carboxyl groups are directly bonded to an aromatic hydrocarbon group having 6 to 30 carbon atoms such as terephthalic acid, isophthalic acid, naphthalenedicarboxylic acid, 5-sodium sulfoisophthalic acid and 3,5-dicarboxylic acid benzenesulfonic acid tetramethylphosphonium salt; compounds in which 2 or less carboxyl groups are directly bonded to an aliphatic hydrocarbon group having 1 to 30 carbon atoms, such as formic acid, acetic acid, propionic acid, butanoic acid, oxalic acid, succinic acid, adipic acid, dodecane diacid, fumaric acid, maleic acid and 1,4-cyclohexanedicarboxylic acid; compounds in which a hydroxyl group and a carboxyl group are directly bonded to an aliphatic hydrocarbon group having 1 to 30 carbon atoms, such as lactic acid and glycolic acid, and these compounds in which the carboxyl group is esterified by lower alcohol.

When the polycondensation polymer is polyamide resin or polycarbonate resin, a starting monomer described in the above (B), a prepolymer having a lower molecular weight or a compound simultaneously produced in the polycondensation reaction may be used as a molecular weight reducing agent. In addition, the aforementioned molecular weight reducing agents for polyester resin may be used as a molecular weight reducing agent for polyamide resin or polycarbonate resin, or the aforementioned molecular weight reducing agents for polyamide resin or polycarbonate resin may be used as a molecular weight reducing agent for polyester resin. Further, a method of suppressing increase in the molecular weight by inhibiting the polycondensation reaction by adding a compound which inhibits the action of polymerization catalyst such as water or trimethyl phosphate, a method of not only decreasing the molecular weight but also suppressing the increase in the molecular weight by adding a mono-functional or low reactive compound which can serve as a reaction terminal blocking agent, or a method of inhibiting the polycondensation reaction by lowering the temperature of a prepolymer by adding a lower temperature prepolymer or mixing part of a prepolymer adjusted to a lower temperature in some portion with the rest of the prepolymer.

The molecular weight increasing agent is not particularly limited as long as it has action of increasing the molecular weight of a prepolymer upon addition. For example, molecular weight can be increased by adding a higher molecular weight prepolymer collected from the step closer to the final product, a commercially available high molecular weight polymer or a high molecular weight polymer produced by another polymerization method such as solid-state polymerization and by carrying out an exchange reaction. More specifically, useful is a method or a combination of two or more methods selected from a method of increasing molecular weight by a partial cross-linking reaction by adding a compound having 3 or more functional groups capable of inducing a condensation reaction, such as glycerin, pentaerythritol, sorbitol, 1,2,4-benzenetricarboxylic acid or citric acid; a method of increasing molecular weight by promoting a polycondensation reaction by adding, or adding in an amount greater than usual amount, a compound having action of a polymerization catalyst containing titanium, germanium, antimony, tin, aluminum or cobalt, such as hydrolysates obtained by hydrolysis of titanium oxide, titanium tetrabutoxide, titanium tetraisopropoxide, a halogenated titanium compound or titanium alkoxide, hydrolysates obtained by hydrolysis of germanium oxide, germanium isopropoxide or germanium alkoxide, antimony oxide, tin acetate, tin 2-ethylhexanoate, aluminum acetate, aluminum propionate, aluminum lactate, aluminum chloride, aluminum hydroxide, aluminum carbonate, aluminum phosphate, aluminum ethoxide, aluminum isopropoxide, aluminum acetylacetonate and cobalt acetate; and a method of increasing molecular weight by facilitating a polycondensation reaction by increasing the temperature of a prepolymer with the addition of a prepolymer heated to a higher temperature or by mixing part of a prepolymer adjusted to a higher temperature in some portion with the rest of the prepolymer.

(E-6) others:

In the present invention, other than supplying an additive such as a stabilizer, a nucleating agent or a pigment through the above-described perforated plate of the polymerization reactor according to need, they may be added to the resin using a single or twin screw kneader or a static mixer positioned between the polymerization reactor and the molding machine.

In the present invention, various additives, e.g., delustering agents, heat stabilizers, flame retardants, antistatic agent, antifoaming agents, orthochromatic agents, antioxidants, ultraviolet absorbers, crystal nucleators, brightening agents and scavengers for impurities may be copolymerized or mixed according to need.
These additives can be added at any stage.

In particular, an appropriate stabilizer is preferably added depending on polymers to be polymerized in the present invention. In the case of polyester resin, for example, pentavalent and/or trivalent phosphorus compounds or hindered phenol compounds are preferred. The phosphorus compound is added so that the weight ratio of phosphorus in the polymer is preferably 2 to 500 ppm, more preferably 10 to 200 ppm. Examples of specific compounds preferred include trimethyl phosphite, phosphoric acid and phosphorous acid. Phosphorus compounds are preferred because they can suppress coloring of a polymer and serve as a crystal nucleator.

A hindered phenol compound means a phenol derivative having a substituent with steric hindrance at a position adjacent to a phenol hydroxyl group and containing one or more ester bond in a molecule. The hindered phenol compound is added in a proportion of preferably 0.001 to 1% by weight, more preferably 0.01 to 0.2% by weight based on the weight ratio the obtained polymer.

Specific examples of such compounds include pentaerythritol tetrakis [3-(3,5-di-tert-butyl-4-hydroxyphenyl) propionate], 1,1, 3-tris (2-methyl-4-hydroxy-5-tert-butylphenyl)butane, octadecyl-3-(3,5-di-tert-butyl-4-hydroxyphenyl) propionate and N,N'-hexamethylene bis(3,5-di-tert-butyl-4-hydroxyhydrocinnamide). Using these stabilizers together is one of the preferred methods.

Although these stabilizers can be added at any stage before molding, it is preferred that a phosphorus compound is added at an initial stage of the polycondensation reaction, and a hindered phenol compound is added at an initial stage of the polycondensation reaction or after discharging the produced polymer from the polymerization reactor.

Further, a crystal nucleator may be added in the present invention. In the case of polyester resin, for example, a phosphorus compound, an organic acid metal salt and powder of polyolefin or other resin are preferable. The crystal nucleator may be added in a proportion of preferably 2 to 1000 ppm, more preferably 10 to 500 ppm in the polymer.

Specific examples thereof include phosphates such as 2,2'-methylene bis(4,6-di-t-butylphenyl)sodium phosphate and bis(4-t-butylphenyl)sodium phosphate, sorbitols such as bis(p-methylbenzylidene)sorbitol, and metal element-containing compounds such as bis(4-t-butylbenzoic acid)hydroxyaluminum. In particular, a crystal nucleator is preferably used for preforms of PET bottles whose mouth part is crystallized by heating, in order to promote the crystallization and lower the thermal crystallization temperature.

Further, in the present invention, addition of a scavenger for low molecular weight volatile impurities is one of the preferred methods. In the case of PET, for example, acetaldehyde is generated as impurities, and examples of scavengers for acetaldehyde include polymers or oligomers of polyamide or polyesteramide, and low molecular weight compounds having an amide group or an amine group such as 2-aminobenzamide. Specific examples thereof include polymers such as polyamide including nylon 6.6, nylon 6 and nylon 4.6 and polyethyleneimine, and a reaction product of N-phenylbenzeneamine and 2,4,4-trimethylpentene, and Irganox 1098® and Irganox 565® available from Ciba Specialty Chemicals. These scavengers are preferably added after the produced polymer is discharged from the polymerization reactor and before it is fed into the molding machine.

(F) Description of molding method:

The produced polymer is once pelletized, then melted again and subjected to molding, or by a method in which the polymer is transferred to a molding machine in a molten state and molded, higher quality molded articles can be produced at low cost.

In the case of pelletization, it is desired that the pelletized polymer is uniformly extruded using an extruder with reduced loss. To obtain such pellet, it is preferred that molten polymer is extruded in the form of a strand or a sheet, immediately put in a coolant such as water to be cooled and cut. The temperature of the coolant is preferably 60°C or lower, more preferably 50°C or lower and further preferably 40°C or lower. Water is preferable as a coolant in view of economical efficiency and handling properties, and so the temperature of the coolant is preferably 0°C or higher. Cutting for pelletization is preferably performed after cooling the resin to 100°C or lower within 120 seconds from extrusion.

When the produced polymer is transferred to a molding machine in a molten state and molded, it is important that the polymer discharged from the polymerization reactor is transferred to the molding machine and molded while maintaining the quality by suppressing lowering of polymerization degree, coloring and generation of impurities due to thermal decomposition.

A polymer once pelletized requires high temperature heating in melt processing particularly in the case of a highly crystalline polymer, and conditions become severe as heat tends to be generated by shearing, resulting in the problem of deterioration of the quality. On the contrary, molded articles produced by the polymerization method and the molding method of the present invention hardly suffer from deterioration in quality before and after the melt processing. This seems to be because entry of leak air, breakage of molecular chain due to shearing or deterioration of resin due to residence in a molten state hardly occurs since polymerization is completed at a low polymerization temperature in a short period in the polymerization method of the present invention and the polymerization apparatus has no rotary driving unit or no resin pool in the main body, and because the polymer is not affected by moisture absorption or oxidation deterioration when supplied to a melt processing apparatus. Further, compared to a molding method after pelletization, extra steps and energy for transport and storage of pellets and drying of pellets before molding can be omitted.

To transfer the polymer polymerized by the polymerization method of the present invention to a molding machine in a molten state and mold the polymer, it is necessary to transfer the polymer discharged from the polymerization reactor to the molding machine and perform melt molding in a short period at the lowest possible temperature without solidifying the polymer. Herein, the molten state means that a polymer is melted by heating and in a flowing state, with a viscosity of about 500,000 Pa.s or lower.

When the temperature for transferring a produced polymer to a molding machine and molding is (crystalline melting point -10°C) or higher, stable operation is possible without remarkable increase in viscosity or solidification. When the temperature is set to (crystalline melting point +60°C) or lower, a high quality molded article with little coloring or generation of volatile impurities due to thermal decomposition can be produced. The temperature is preferably in the range of (crystalline melting point +0 to 40°C), more preferably (crystalline melting point +0 to 30°C), further preferably (crystalline melting point +0 to 20°C), and particularly preferably (crystalline melting point +1 to 15°C).. The temperature can be set to such ranges by appropriately controlling the temperature of a transfer pipe, a transfer pump and a heater or a jacket covering the molding machine.

The time taken before molding is preferably within 40 minutes, more preferably within 20 minutes and particularly preferably within 10 minutes. Obviously, the shorter the time, the better. Herein, the time taken before molding means a period of time in which a molten polymer is discharged from a drainage pump of the polymerization reactor and cooled to not higher than a temperature at which the polymer crystallizes in a molding machine or after being discharged from the molding machine. In the case of continuously transferring through a pipe, the average time calculated from the volume of the pipe or the like and the flow rate can be employed. When this time varies, it is necessary to adjust the time to be within the above-described time range.

Referring to the molding machine, a commercially available pellet molding machine may be used as is or after modification. Since molten polymer is directly supplied to the molding machine from the polymerization reactor in the present invention, it is possible to simplify or omit a pellet plasticizing mechanism such as a melt plasticizing screw which is essential in a conventional pellet molding machine. As a result, molding can be performed under conditions in which heat generation by shearing caused by the plasticizing mechanism is low and thus high quality molded articles can be produced.

Examples of molded articles produced by the above-described method include preforms for molding hollow articles, films, sheets and pellets. These articles may be produced using one molding machine, or the same kind of articles may be simultaneously produced using two or more molding machines, or multiple kinds of articles may be simultaneously produced using two or more molding machines.

Since an injection molding machine is intermittently operated, when a plurality of injection molding machines are used, molding cycles of the molding machines may be delayed at a constant interval to average the flow rate in order to keep a constant flow rate without allowing the polymer discharged from the polymerization reactor to stay in a pipe connecting the polymerization reactor and the molding machine for a long time.

Further, in the case that a polymer continuously discharged from a polymerization reactor is introduced into an intermittently operating molding machine, an accumulator for accumulating a molten polymer is preferably installed along the path. It is more preferable that the molding machine is synchronized with the accumulator so as to reduce accumulation of molten polymer.

Furthermore, an extruder is preferably provided separately from a molding machine so as to perform pelletization simultaneously with molding.

When the polymerization reactor of the present invention has two or more outlets, plural kinds of polymers or compositions can be simultaneously produced. Accordingly, composite molded articles such as multilayer bottles, multilayer films and conjugated fibers in which polymers or compositions are combined at any proportions can be produced, or different molded articles may be simultaneously produced without combining those plural kinds of polymers or compositions. In particular, in the case of producing composite molded articles, since plural kinds of polymers or compositions can be prepared in one polymerization reactor, the pipe 5 transferring polymers or compositions to a composite molding machine can be shortened, and thus deterioration of quality of the polymer in the pipe (in the case of PET resin, increase of acetaldehyde content) can be prevented. This method is thus preferred and also applicable to production of PET/PEN composite bottles having low acetaldehyde content and excellent gas barrier properties.

A single kind of polymer or composition and a molded article thereof may be produced as well. For example, possible applications include simultaneous production of PET resin preforms having a high polymerization degree suitable for bottles of carbonated beverages, PET resin preforms having a middle polymerization degree suitable for bottles of non-carbonated beverages and PET resin pellets having a relatively low polymerization degree suitable for uses as fiber, using one polymerization reactor having three outlets, two molding machines and a pelletizer. A plurality of molding machines or pelletizers may be connected to an outlet of a polymerization reactor, or a molding machine or a pelletizer may be connected to a plurality of outlets of a polymerization reactor, or they may be connected so that the combination of the outlet of the polymerization reactor and the molding machine or the pelletizer can be changed.

(G) Description of produced polymer:

According to the production method of the present invention, any kind of prepolymer and/or polymer modifier can be introduced into each area of a perforated plate to perform polymerization. Such a prepolymer and/or a polymer modifier introduced from each area of a perforated plate can be polymerized while falling along a support in a polymerization reactor without being combined, can be polymerized while falling along a support so as to be combined, or polymerized while falling along a support so as to be partially combined. In addition, according to the polymerization method of the present invention, a polymer homogeneously mixed and uniform in quality can be produced at low temperatures despite the absence of a power driven stirring mechanism such as stirring blade, which was impossible by conventionally known polymerization reactors and kneaders, and so a high quality polymer can be produced. For example, in the case of PET/PBT polymer alloy, because the melting point of PET and the thermal decomposition temperature of PBT are close and the alloy could only be produced at a temperature 20°C or more higher than the melting point of PET by conventional technique, deterioration of PBT tends to occur and so it was difficult to produce a high quality PET/PBT polymer alloy; however, according to the present invention, production at a polymerization temperature equal to or lower than the melting point of PET is possible, and therefore a high quality polymer alloy can be produced. Moreover, by polymerizing while entirely combining prepolymers on a support, a randomly transesterified PET/PBT alloy can be produced, or by polymerizing while combining part of prepolymers on a support, a PET/PBT alloy having a high blocking properties can be produced.

Examples of polymer alloys produced by the above method include polyester/polyester alloys, polyester/PC alloys and polyester/polyolefin alloys.

Examples of polyester/polyester alloys include polymer alloys obtained by mixing two or more conventionally known polyester polymers such as PET, PBT, PTT, polyester elastomer, polyester ether elastomer, polyallylate, liquid crystalline polyester and aliphatic polyester in any proportion according to any method of combining on the support.

Examples of polyester/PC alloys include polymer alloys obtained by mixing one or more conventionally known polyester polymers such as PET, PBT, PTT, polyester elastomer, polyester ether elastomer, polyallylate, liquid crystalline polyester and aliphatic polyester with a conventionally known polycarbonate polymer in any proportion according to any method of combining on the support.

Examples of polyester/polyolefin alloys include polymer alloys obtained by mixing one or more conventionally known polyester polymers such as PET, PBT, PTT, polyester elastomer, polyester ether elastomer, polyallylate, liquid crystalline polyester and aliphatic polyester with a conventionally known polyolefin polymer such as polyethylene or polypropylene in any proportion according to any method of combining on the support. Herein, using a polyolefin polymer containing a hydroxyl group, a carboxyl group, an epoxy group, an amino group, an ester group or an amide group bondable to a polyester polymer is also preferred.

Examples of polymer alloys also include polyester/vinyl polymer alloys, polyester/nylon alloys, polyester/polysulfone alloys, polyester/silicon polymer alloys, and polymer alloys obtained by mixing two or more conventionally known polymers such as polyester polymer, polycarbonate polymer, polyolefin polymer, vinyl polymer, nylon polymer, polysulfone polymer and silicon polymer in any proportion according to any method of combining on the support. Herein, using a polymer containing a hydroxyl group, a carboxyl group, an epoxy group, an amino group, an ester group or an amide group chemically bondable to the above component is also preferred. The components may have a linear, branched or grafted skeleton.

Referring now to another application of the present invention, a polymer excellent in melt flowability having a molecular weight distribution represented by Mw/Mn of 2.0 or higher can also be produced by simultaneous polymerization of polymers having a different polymerization degree at two or more areas of the support in the polymerization reactor. The molecular weight distribution can be adjusted as desired based on the kind, the polymerization degree and the amount of prepolymers introduced into each area of the perforated plate. The molecular weight distribution is more preferably 2.5 or higher, further preferably 3.0 or higher, particularly preferably 3.5 or higher, and most preferably 4.0 or higher in order to improve the melt flowability. A higher molecular weight distribution not only improves melt flowability but also facilitates crystallization of polymer, for example, and so producing a polymer having a higher molecular weight distribution by combining a component having a branched or grafted skeleton in addition to a linear skeleton is also preferred.

(typical embodiment of production method and apparatus of the present invention)

Preferred embodiments of the present invention will now be described taking polymerization of PET as an example with reference to the figures.

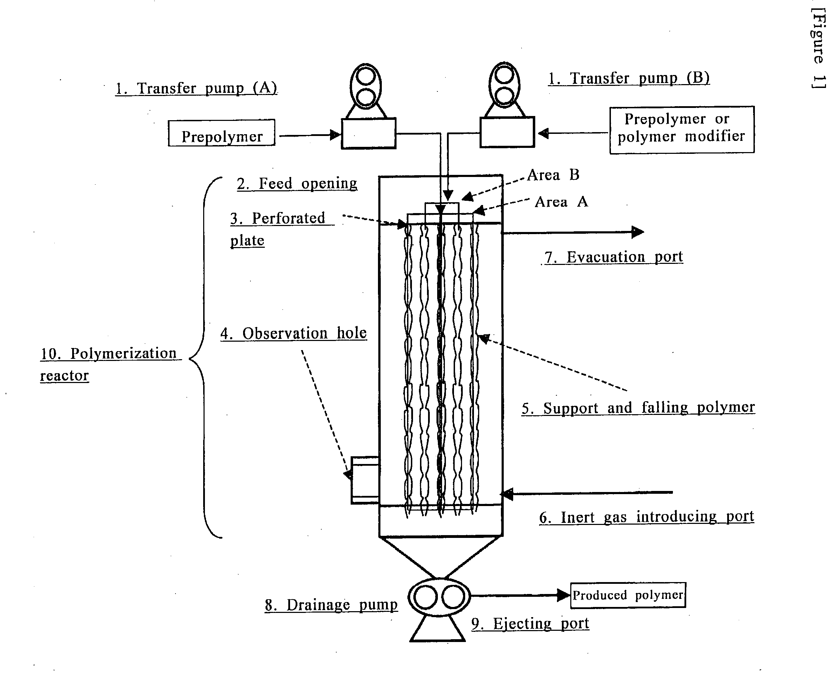

Figure 1 and the figures that follow illustrate embodiments of preferred combination for accomplishing the method of the present invention, but the present invention is not limited to these.

Referring to Figure 1, a prepolymer of a polycondensation polymer such as PET is fed to the polymerization reactor 10 through a feed opening 2 by a transfer pump (A) and/or a transfer pump (B) 1, passes through holes in area A and/or area B of a perforated plate 3, introduced into the polymerization reactor and falls along a support 5. At this stage, a prepolymer of a different polymer and/or a polymer modifier may be fed instead of the prepolymer of PET by the transfer pump (A) or transfer pump (B) 1.

The inside of the polymerization reactor is controlled to a pre-determined reduced pressure and by-product ethylene glycol or inert gas such as nitrogen fed through an inert gas feed opening 6 as required is discharged from an evacuation port 7. The produced polymer is discharged from an outlet 9 using a discharge pump 8.

Upon polymerization with allowing a prepolymer to fall along a support, streams of prepolymer supplied from each area may or may not be combined on the support by changing the position of the areas of the perforated plate and the support, and whether combined or not is selected depending on the purpose.

After falling down to the bottom of the polymerization reactor, the produced polymer is discharged from an outlet using a discharge pump. Upon this, it is preferred that the amount of the produced polymer accumulated at the bottom of the polymerization reactor is kept as small and constant as possible. Referring to a method of controlling the accumulated amount, the amount can be controlled by adjusting the flow rate of the transfer pump and the discharge pump while observing the accumulated amount through an observation hole 4 or monitoring the accumulated amount using an electrostatic type level meter.

The transfer pump, the polymerization reactor main body, the discharge pump and the transfer pipe are heated and kept warm by a heater or a jacket.

The polymerization reactor used in the present invention may also have an agitator or the like at the bottom of the polymerization reactor, but such agitator is not always required. It is therefore possible to omit the rotary driving part of the main body of the polymerization reactor and polymerization can be performed under an excellent sealed condition even in a high vacuum. Because the rotary driving part of the discharge pump is covered with the resin discharged, the polymerization reactor of the present invention has much better sealing properties than a polymerization reactor with a rotary driving part attached to the main body.

The method of the present invention may be carried out with one polymerization reactor, or with two or more reactors.

In the present invention, the process for increasing the molecular weight of a prepolymer of a polycondensation polymer such as PET to the intended molecular weight of the high polymerization degree polycondensation polymer such as PET may be performed according to a method of polymerization in which whole prepolymer is allowed to fall along a support through holes of a perforated plate. The process can be performed in combination with another polymerization method, e.g., an agitation vessel polymerization reactor or a horizontal agitating polymerization reactor.

Examples of horizontal agitating polymerization reactors include a screw type, an independent blade type, an uniaxial type or a biaxial type polymerization reactor described, for example, in Chapter 4, "Research Report of Research Group on Reaction Engineering: Reactive Processing Part 2" (Society of Polymer Science, 1992).

As the agitation vessel polymerization reactor, any agitating vessels described in Chapter 11 of Handbook of Chemical Equipment (edited by Society of Chemical Engineers, Japan; 1989) can be used, for example.

The shape of the vessel is not particularly limited and a vertical or horizontal cylinder is usually used. The shape of the agitation blade is not particularly limited either, and a paddle type blade, an anchor type blade, a turbine type blade, a screw type blade, a ribbon type blade or a double blade may be used.

The process of producing a prepolymer from starting materials may be batchwise or continuous. When the process is performed batchwise, all the starting materials and the reactants are fed to the reactor and allowed to react for a pre-determined time, and all the reactants are transferred to the subsequent reactor. On the other hand, when the process is continuously performed, starting materials and reactants are continuously fed to each reactor and the reactants are continuously discharged. In the case of mass production of polycondensation prepolymer of PET and molded articles thereof having uniform quality, the process is preferably performed batchwise.

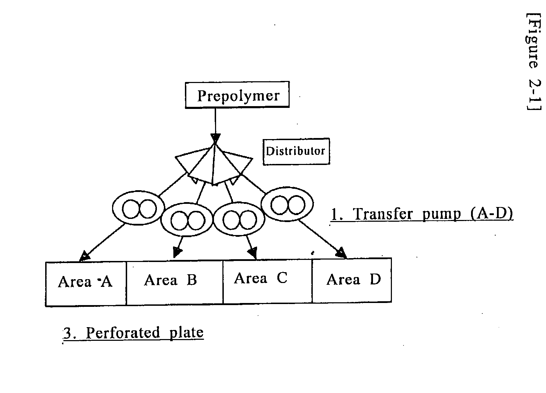

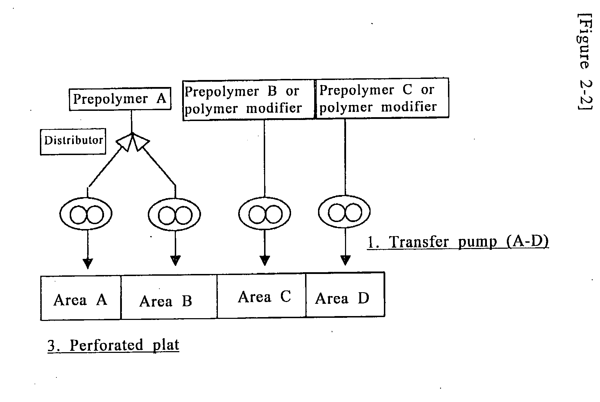

Figure 2-1 and Figure 2-2 illustrate a specific example of a method of supplying various prepolymers and polymer modifiers to each area of the perforated plate 3.

Figure 2-1 shows an example of supplying one prepolymer through each area of a perforated plate. By individually setting the supply amount of prepolymer per area (A to D) of the perforated plate 3 with respective transfer pumps (A to D) 1, the polymerization velocity and the polymerization degree of the polymer can be accurately controlled and a broader molecular weight distribution can be obtained, whereby the melt flowability is further improved. In addition, by supplying the prepolymer from a certain area alone, the polymerization velocity can be changed without greatly changing the polymerization condition of the polymerization reactor of the present invention.

Figure 2-2 shows an example of supplying one or plural kinds of prepolymers and/or polymer modifiers through each area of a perforated plate. By individually setting the supply amount of prepolymer per area (A to D) of the perforated plate 3 with the respective transfer pumps (A to D) 1 as shown in the figure, a copolymer having any composition or a polymer whose properties are improved by adding a modifier in any composition can be produced.

In both examples, the supply amount in each area (A to D) of the perforated plate 3 can be changed as desired during polymerization, and thus various high quality polymers can be produced in small quantities at low cost.

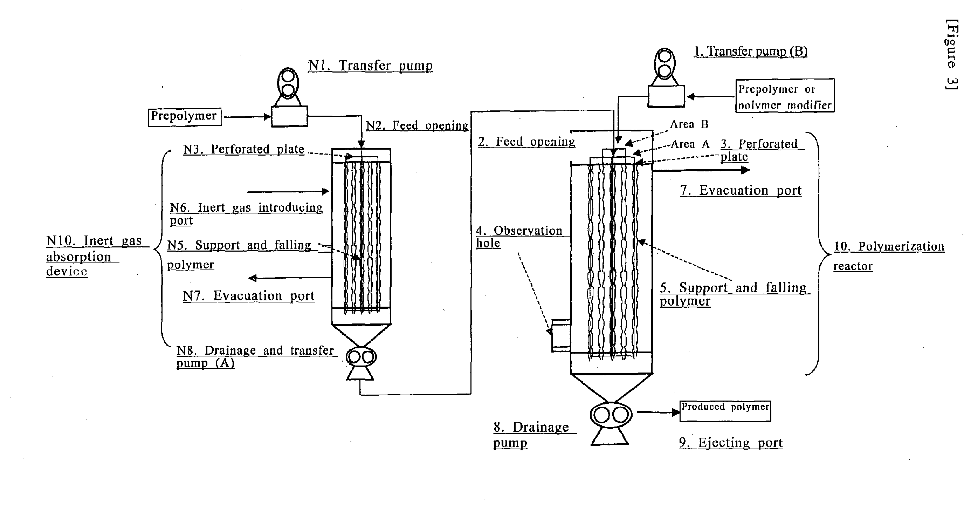

Figure 3 shows a specific example of a polymerization reactor for accomplishing the method of the present invention using an inert gas absorption apparatus. A prepolymer of PET is fed to an inert gas absorption apparatus N10 through a feed opening N2 via a transfer pump N1, passes through a perforated plate N3 to be introduced into the inert gas absorption apparatus and falls along a support N5. The inside of the inert gas absorption apparatus is controlled to a pre-determined reduced pressure by evacuation port N7, and the prepolymer absorbs inert gas such as nitrogen introduced from an inert gas introducing port N6 while falling. The prepolymer is then fed to a polymerization reactor 10 through a feed opening 2 via a drainage/transfer pump N8, introduced into the polymerization reactor through area A of a perforated plate 3 and allowed to fall along a support 5.

In these steps, a prepolymer of the same or a different polymer and/or a polymer modifier may be simultaneously fed through area B of the perforated plate 3 via a transfer pump (B) 1. Alternatively, the transfer pump (B) 1 may be installed to the inert gas feeding apparatus N10, and an area A and an area B may be provided in the perforated plate N3 of the inert gas supply apparatus N10, not in the perforated plate 3 of the polymerization reactor 10, so as to supply the prepolymer of the same or a different polymer and/or a polymer modifier to the area B of the perforated plate N3.

The inside of the polymerization reactor is controlled to a pre-determined reduced pressure and by-product ethylene glycol is discharged from an evacuation port 7. The produced polymer is discharged from an outlet 9 using a discharge pump 8. The transfer pump, the inert gas absorption apparatus main body, the polymerization reactor main body, the discharge pump, the transfer pipe, the diversion switching valve, the pressure control valve, the back pressure control valve, the molding machine and the pelletizer are heated and kept warm by a heater or a jacket.

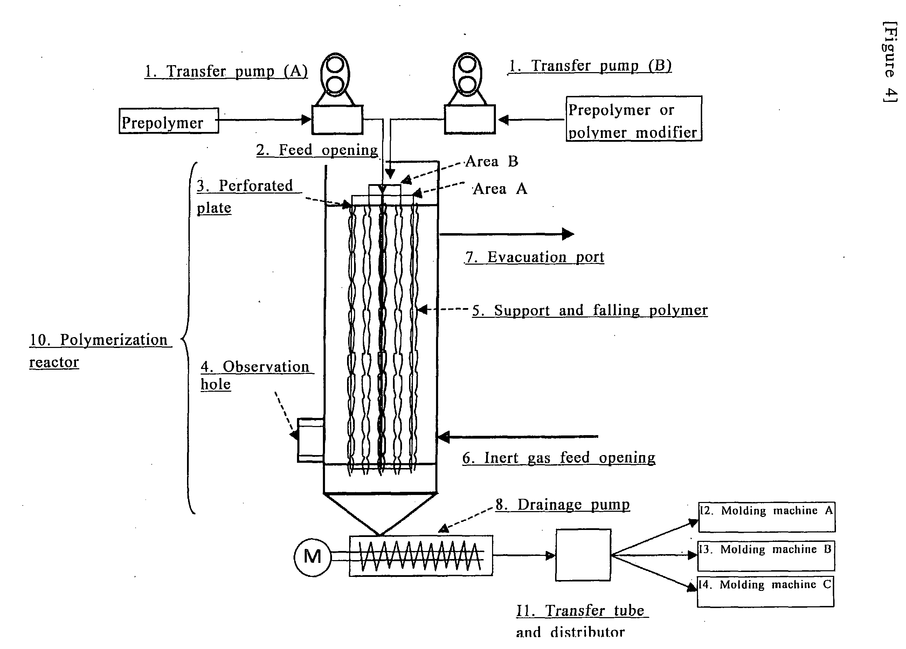

Figure 4 is a schematic view illustrating a specific example of an apparatus for accomplishing the polymerization method and the molding method employed in the present invention.

As described in Figure 1, a prepolymer of a polycondensation polymer such as PET is fed to a polymerization reactor through a feed opening 2 by a transfer pump (A) and/or a transfer pump (B) 1, introduced into the polymerization reactor through holes in area A and/or area B of a perforated plate 3, and falls along a support 5. At this stage, a prepolymer of a different polymer and/or a polymer modifier may be fed instead of the prepolymer of PET by the transfer pump (A) or transfer pump (B) 1.

The inside of the polymerization reactor is controlled to a pre-determined reduced pressure and by-product ethylene glycol or inert gas such as nitrogen fed through an inert gas feed opening 6 as required is discharged from an evacuation port 7. The produced polymer is continuously discharged using a discharge pump 8 and supplied to molding machines A to C (12 to 14) through a transfer pipe and distributor I1. Herein, the distributor is a unit for distributing molten polymer to a plurality of pipes, which may be equipped with a switching valve so as to control the flow of the molten polymer more accurately. One or more molding machines may be connected (3 machines in this figure). The transfer pump, the polymerization reactor main body, the discharge pump, the transfer pipe, the distributor and the molding machine are heated and kept warm by a heater or a jacket.

The molding machine in the present invention refers to an apparatus for forming molten resin into a specific shape, and examples thereof include extrusion molding machines, injection molding machines and blow molding machines. Molded articles molded using a molding machine include bottles, preforms of bottles, films, sheets, tubes, bars, fibers and injection molded articles of various shapes. Of these articles, the present invention is suitable for producing preforms of beverage bottles. It is strongly desired that beverage bottles have excellent strength and transparency, contain a reduced amount of low molecular weight volatile impurities which affect the taste and the odor of the content, typically aldehyde in the case of PET, and can be produced at low cost with high productivity.

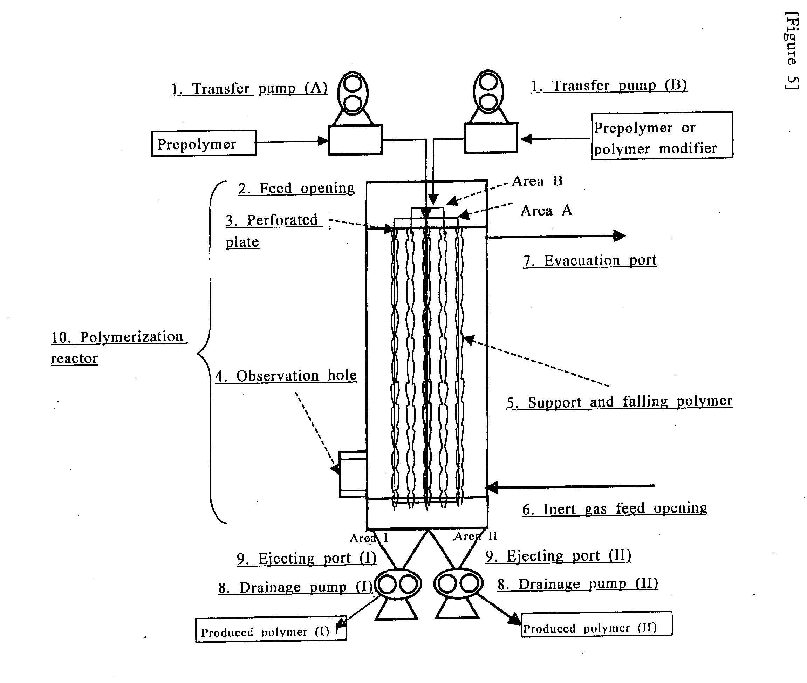

Figure 5 is a schematic view illustrating a specific example of a polymerization reactor of the present invention having two or more outlets for discharging a produced polymer.

As described in Figure 1, a prepolymer of a polycondensation polymer such as PET is fed to a polymerization reactor through a feed opening 2 by a transfer pump (A) and/or a transfer pump (B) 1, introduced into the polymerization reactor through holes in area A and/or area B of a perforated plate 3, and falls along a support 5. At this stage, a prepolymer of a different polymer and/or a polymer modifier may be fed instead of the prepolymer of PET by the transfer pump (A) or transfer pump (B) 1.

The inside of the polymerization reactor is controlled to a pre-determined reduced pressure and by-product ethylene glycol or inert gas such as nitrogen fed through an inert gas feed opening 6 as required is discharged from an evacuation port 7. The produced polymer is discharged through two separated areas from outlets (I and II) 9 using discharge pumps (I and II) 8.

Upon polymerization with allowing a prepolymer to fall along a support, streams of prepolymer supplied from each area of the perforated plate may or may not be combined on the support by changing the position of the areas of the perforated plate and the support, and whether combined or not is selected depending on the purpose. Further, polymers produced by allowing prepolymers to fall so as not to be combined may be discharged from different outlet areas or the same outlet area, or polymers produced by allowing prepolymers to fall so as to be combined may be discharged from an identical outlet area or plural outlet areas, and how to discharge is selected depending on the purpose.

After falling down to the bottom of the polymerization reactor, the produced polymer is discharged from an outlet using a discharge pump. Upon this, it is preferred that the amount of the produced polymer accumulated at the bottom of the polymerization reactor is kept as small and constant as possible. Referring to a method of controlling the accumulated amount, the amount can be controlled by adjusting the flow rate of the transfer pump and the discharge pump while observing the accumulated amount through an observation hole 4 or monitoring the accumulated amount using an electrostatic type level meter.

The transfer pump, the polymerization reactor main body, the discharge pump and the transfer pipe are heated and kept warm by a heater or a jacket.

The polymerization reactor used in the present invention may also have an agitator or the like at the bottom of the polymerization reactor, but such agitator is not always required. It is therefore possible to omit the rotary driving part of the main body of the polymerization reactor and polymerization can be performed under an excellent sealed condition even in a high vacuum. Because the rotary driving part of the discharge pump is covered with the resin discharged, the polymerization reactor of the present invention has much better sealing properties than a polymerization reactor with a rotary driving part attached to the main body. The method of the present invention may be carried out with one polymerization reactor, or with two or more reactors.

In the present invention, the process for increasing the molecular weight of a prepolymer of a polycondensation polymer, such as PET to the intended molecular weight of the high polymerization degree polycondensation polymer such as PET may be performed according to a method of polymerization in which whole prepolymer is allowed to fall along a support through holes of a perforated plate. The process is preferably performed in combination with another polymerization method, e.g., an agitation vessel polymerization reactor or a horizontal agitating polymerization reactor.

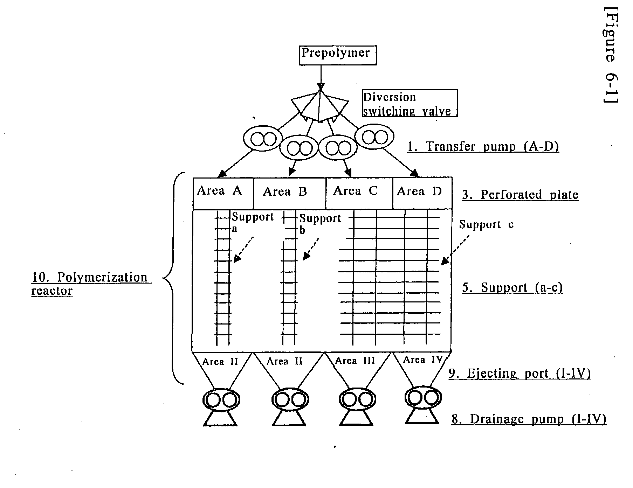

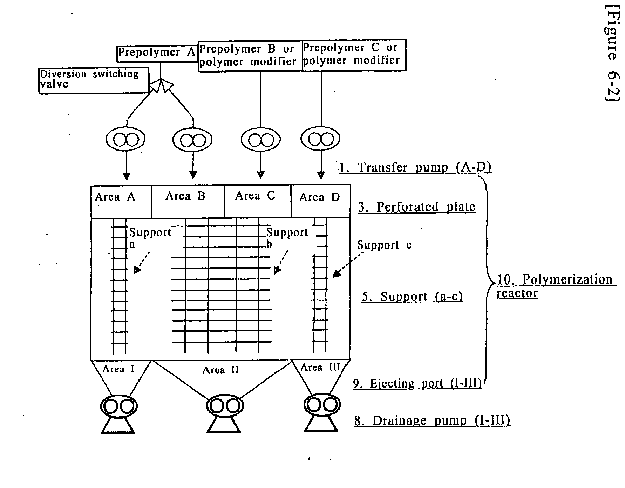

Figure 6-1 and Figure 6-2 show examples of a method of supplying various prepolymers and polymer modifiers to each area of perforated plate 3 and a method of discharging a polymer produced by allowing prepolymers to fall along the support from two or more outlets.

Figure 6-1 shows an example of supplying one prepolymer through each area of a perforated plate. By individually setting the supply amount of prepolymer per area (A to D) of the perforated plate 3 with respective transfer pumps (A to D) 1, the polymerization velocity and the polymerization degree of the polymer can be accurately controlled and a broader molecular weight distribution can be obtained, whereby the melt flowability is further improved. In addition, by supplying the prepolymer from a certain area alone, the polymerization velocity can be changed without greatly changing the polymerization condition of the polymerization reactor of the present invention.

Prepolymers supplied from each area of the perforated plate 3 falling along the support may or may not be combined with each other depending on the position of the support. For example, prepolymers supplied from area A and area B of the perforated plate fall along a support a and a support b without being combined with each other, and individually discharged from outlet area I and area II. Prepolymers supplied from area C and area D of the perforated plate are combined on the support c, homogeneously mixed and polymerized while falling along the support c, and distributed at outlet area III and area IV and discharged.

Figure 6-2 shows an example of supplying one or plural kinds of prepolymers and/or polymer modifiers through each area of a perforated plate. By individually setting the supply amount of prepolymer per area (A to D) of the perforated plate 3 with the respective transfer pumps (A to D) 1 as shown in the figure, a copolymer having any composition or a polymer whose properties are improved by adding a modifier in any composition can be produced.

Prepolymers supplied from each area of the perforated plate falling along the support may or may not be combined with each other depending on the position of the support. For example, prepolymer A supplied from area A of the perforated plate falls along a support a without being combined with other prepolymers and discharged from outlet area I. On the other hand, part of prepolymer A is also supplied from area B of the perforated plate, combined with prepolymer B or polymer modifier supplied from area C of the perforated plate on the support b, homogeneously mixed and polymerized while falling along the support b, and discharged from outlet area II. Also, prepolymer C supplied from area D is not combined with other prepolymers, polymerized while falling along the support c and discharged from outlet area III.

In addition to the configurations shown in the figures, areas of the perforated plate, supports and areas of the outlets may be positioned as desired according to the purpose, and the apparatus can be designed so as to discharge the desired polymer from each outlet in the desired production amount.

In both examples, the supply amount in each area (A to D) of the perforated plate can be changed as desired during polymerization, and thus various high quality polymers can be produced in small quantities at low cost.

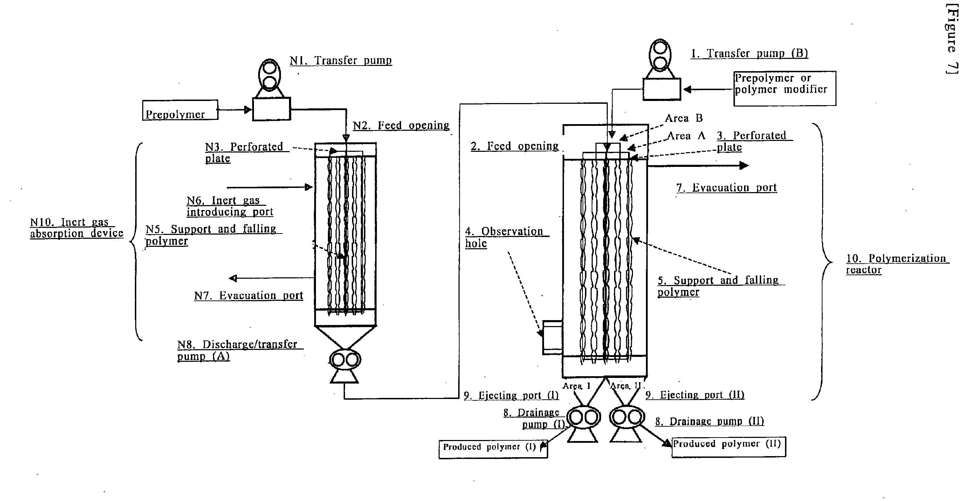

Figure 7 shows a specific example of a polymerization reactor for practicing the method of the present invention using an inert gas absorption apparatus. A prepolymer of a polycondensation polymer such as PET is fed to an inert gas absorption apparatus N10 through a feed opening N2 via a transfer pump N1, passes through the perforated plate N3 to be introduced into the inert gas absorption apparatus N10 and falls along a support N5. The inside of the inert gas absorption apparatus is controlled to a pre-determined reduced pressure by evacuation port N7, and the prepolymer absorbs inert gas such as nitrogen introduced from an inert gas introducing port N6 while falling. The prepolymer is then fed to a polymerization reactor 10 through a feed opening 2 via a drainage/transfer pump N8, introduced into the polymerization reactor through area A of a perforated plate 3 and allowed to fall along a support 5.

In these steps, a prepolymer of the same or a different polymer and/or a polymer modifier may be simultaneously fed through area B of the perforated plate 3 via the transfer pump (B) 1. Alternatively, the transfer pump (B) 1 may be installed to the inert gas absorption apparatus N10, and an area A and an area B may be provided in the perforated plate N3 of the inert gas supply apparatus N10, not in the perforated plate 3 of the polymerization reactor 10, so as to supply the prepolymer of the same or a different polymer and/or a polymer modifier to the area B of the perforated plate N3.

The inside of the polymerization reactor is controlled to a pre-determined reduced pressure and by-product ethylene glycol or the like is discharged from an evacuation port 7. The produced polymer is discharged through two separated areas from outlets (I and II) 9 using discharge pumps (I and II) 8. The transfer pump, the inert gas absorption apparatus main body, the polymerization reactor main body, the discharge pump, the transfer pipe, the diversion switching valve, the pressure control valve, the back pressure control valve, the molding machine and the pelletizer are heated and kept warm by a heater or a jacket.

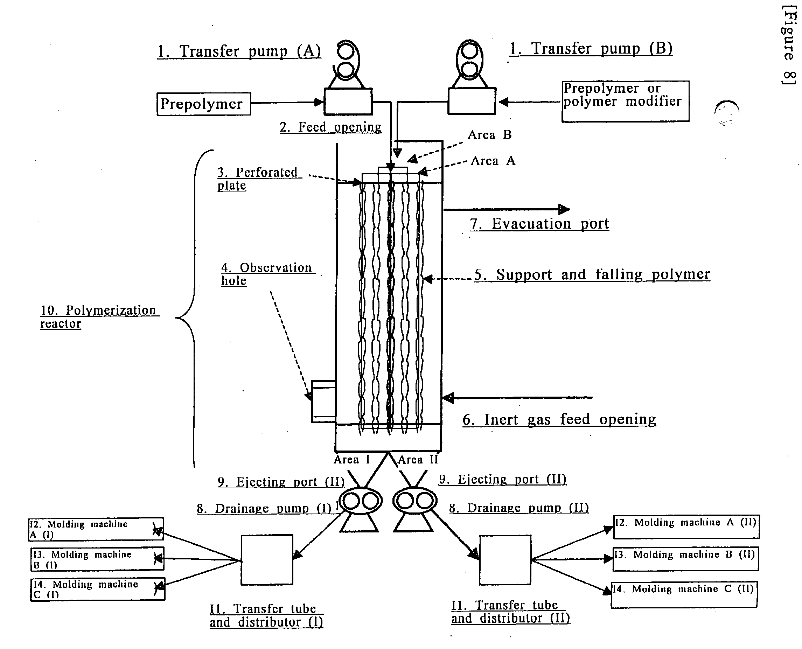

Figure 8 is a schematic view illustrating an example of an apparatus for practicing the polymerization method and the molding method employed in the present invention. As described in Figure 1, a prepolymer of a polycondensation polymer such as PET is fed to a polymerization reactor through a feed opening 2 by a transfer pump (A) and/or a transfer pump (B) 1, introduced into the polymerization reactor through holes in area A and/or area B of a perforated plate 3, and falls along a support 5. At this stage, a prepolymer of a different polymer and/or a polymer modifier may be fed instead of the prepolymer of PET by the transfer pump (A) or transfer pump (B) 1.

The inside of the polymerization reactor is controlled to a pre-determined reduced pressure and by-product ethylene glycol or inert gas such as nitrogen fed through an inert gas feed opening 6 as required is discharged from an evacuation port 7. The produced polymer is continuously discharged through two separated areas from outlets (I and II) 9 using discharge pumps (I and II) 8 and supplied to molding machines A to C (I and II) (I2 to I4) through transfer pipes I1 and distributors (I and II). One or more molding machines may be connected (3 machines in this figure). The transfer pump, the polymerization reactor main body, the discharge pump, the transfer pipe, the distributor and the molding machine are heated and kept warm by a heater or a jacket.

Examples

The present invention is described by means of Examples.

The following methods were used for measuring main measurement values in Examples.

(1) intrinsic viscosity [η]

The intrinsic viscosity [η] was calculated by extrapolating the ratio ηsP/C of a specific viscosity ηsp measured in o-chlorophenol at 35°C by an Ostwald viscometer to a concentration C (g/100 ml) to zero concentration, based on the following formula.

[Equation 1]

$$[\eta] = \lim_{C \to 0} (\eta_{sp}/C)$$

In the case of PET resin, the polymerization degree of the prepolymer can also be evaluated based on the above-described commonly used intrinsic viscosity [η] instead of melt viscosity.

For example, a prepolymer of PET resin having an intrinsic viscosity [η] of 0.15 dl/g has a melt viscosity at 260°C of about 60 poise, and a prepolymer of PET resin having an intrinsic viscosity [η] of 1.2dl/g has a melt viscosity at 260°C of about 100000 poise.

(2) crystalline melting point

The crystalline melting point was measured using Pyris 1 DSC (input-compensating differential scanning calorimeter) manufactured by Perkin Elmer, Inc. under the following conditions. The peak value at an endothermic peak derived from melting of crystal was defined as a crystalline melting point. The peak value was determined using attached analysis software.

Measurement temperature: 0 to 300°C
Temperature rising rate: 10°C/min

(3) carboxyl group content at polymer terminal

1 g of sample was dissolved in 25 ml of benzyl alcohol and 25 ml of chloroform was then added thereto. The resulting solution was subjected to titration using a 1/50N potassium hydroxide benzyl alcohol solution. The carboxyl group content at polymer terminal was calculated from the obtained titration value VA (ml) and a blank value V0 obtained in the absence of PET, according to the following formula.

$$\text{carboxyl group content at polymer terminal (meq/kg)} = (VA - V0) \times 20$$

(4) hue of resin (L value, b value)

1.5 g of a sample was dissolved in 10 g of 1,1,1,3,3,3-hexafluoro-2-propanol, analyzed by an optical transmission method using UV-2500PC (ultraviolet-visible spectrophotometer) manufactured by Shimadzu Corporation, and evaluated by the method in accordance with JIS Z8730 using attached analysis software.

(5) content of impurities

A sample was finely cut and subjected to freeze pulverization using Freezer mill 6700 (freeze pulverization machine) manufactured by SPEX Industries Inc. under cooling with liquid nitrogen for 3 to 10 minutes to give powder having a particle size of 850 to 1000 $\mu$m. 1 g of the powder and 2 ml of water were put in a glass ampoule, the inside air was replaced by nitrogen, and the ampoule was sealed and heated at 130°C for 90 minutes to extract impurities such as acetaldehyde. After cooling, the ampoule was opened and the content of impurities was analyzed using GC-14B (gas chromatograph) manufactured by Shimadzu Corporation under the following conditions.
column: VOCOL (60 m $\times$ 0.25 mm$\phi$ $\times$ film thickness 1.5 $\mu$m)
temperature: maintained at 35°C for 10 minutes, then heated to 100°C at 5°C/minute, then heated from 100 to 220°C at 20°C/minute
temperature of injection port: 220°C
injection method: split method (split ratio=1:30), injected in an amount of 1.5 $\mu$l measurement method: FID method

(6) molecular weight distribution

A sample was dissolved in an eluant, i.e., 1,1,1,3,3,3-hexafluoro-2-propanol (in which 5 mmol of trifluoroacetic acid sodium salt was dissolved) at a concentration of 1.0 mg/ml. The resulting solution was analyzed using HLC-8020 GPC (gel permeation chromatograph) manufactured by TOSOH CORPORATION under the following conditions and evaluated using attached analysis software. column: HFIP-606M+HFIP-603 manufactured by Showa Denko K.K.
column temperature: 40°C
injection amount: 30 $\mu$l
measurement method: RI detector, converted to PMMA

Example 1

Using the apparatus shown in Figure 4, a prepolymer of PET resin having an intrinsic viscosity [$\eta$] of 0.46 dl/g, a carboxyl group content at polymer terminal of 32 meq/kg and a crystalline melting point of 260°C was supplied to a polymerization reactor 10 through a feed opening 2 by a transfer pump (A) 1, and the prepolymer was discharged through holes in area A of a perforated plate 3 in a molten state at 265°C at a rate of 10 g/minute per hole. At the same time, a prepolymer obtained by copolymerizing 4% by mole of cyclohexane dimethanol with PET having an intrinsic viscosity [$\eta$] of 0.28 dl/g, a carboxyl group content at polymer terminal of 30 meq/kg and a crystalline melting point of 240°C was supplied to the polymerization reactor 10 through the feed opening 2 by a transfer pump (B) 1, and the prepolymer was discharged through holes in area B of the perforated plate 3 in a molten state at 265°C at a rate of 10 g/minute per hole.
These supplied prepolymers were polymerized under a reduced pressure of 65 Pa while being allowed to fall along the support at an ambient temperature the same as the discharge temperature, and discharged from the polymerization reactor using a discharge pump 8. The produced polymer was then transferred through a transfer pipe and distributor I1, and preform molding and molding of hollow articles were continuously performed at a molding temperature of 280°C using a twin-screw stretch-blow molding machine (SBIII-100H-15 manufacture by Aoki Technical Laboratory Inc.) as a molding machine A (12). Using an injection molding machine (MJEC-10 manufactured by MODERN MACHINERY CO. LTD.) as a molding machine B (I3), molding was performed at 280°C to prepare a dumbbell specimen. As a molding machine C (14), a pelletizer C was set.

Referring to the perforated plate, one having a thickness of 50 mm and 14 holes 1 mm in diameter linearly aligned in two parallel rows in a distance of 70 mm, with 7 holes in each row at an interval of 10 mm was used. The holes belonging to area A and the holes belonging to area B were alternately aligned. As the support, a lattice form support composed of a wire 2 mm in diameter and 8 m in length each attached immediately below the holes hanging vertically therefrom and wires 2 mm in diameter and 100 mm in length attached perpendicularly to the above wire at an interval of 100 mm was used. The material of the support was stainless steel.

Referring to prepolymers, .those produced by adding 0.04% by weight of diantimony trioxide and trimethyl phosphate in a proportion of 100 ppm based on the weight ratio of phosphorus were used. The residence time in the polymerization reactor was 70 minutes. The residence time means a value obtained by dividing the amount of polymer present in the polymerization reactor by the amount supplied. During the polymerization, intensive foaming of prepolymer discharged through the perforated plate and the consequent contamination of the nozzle surface and walls 5 hardly occurred, while the falling resin contained a large amount of bubbles and rolled down along the support in the form of bubble balls.

As described above, both prepolymers were first discharged at a rate of 10 g/minute per hole and polymerized, and the polymerized resins were fed to molding machines A to C to produce molded articles. Then, polymerization was performed by discharging prepolymers at a supply rate in area A of 15 g/minute per hole and at a supply rate in area B of 5 g/minute per hole, and the polymerized resins were fed to molding machines A to C to produce molded articles. Further, polymerization was performed by discharging prepolymers at a supply rate in area A of 5 g/minute per hole and at a supply rate in area B of 15 g/minute per hole, and the polymerized resins were fed to molding machines A to C to produce molded articles. The molded articles produced under these three conditions were subjected to evaluation of the crystalline melting point, and as a result, each article had a single melting peak, meaning that uniform and high quality copolymers were obtained. Properties of the obtained molded articles and the resin pellets are shown in Table 1.

Example 2

Using the apparatus shown in Figure 1, a prepolymer of PET resin having an intrinsic viscosity [η] of 0.30 dl/g, a carboxyl group content at polymer terminal of 28 meq/kg and a crystalline melting point of 255°C was supplied to a polymerization reactor 10 through a feed opening 2 by a transfer pump (A) 1, and the prepolymer was discharged through holes in area A of a perforated plate 3 in a molten state at 255°C at a rate of 10 g/minute per hole. At the same time, polytetramethylene glycol having an average molecular weight of 2000 was supplied to the polymerization reactor 10 through the feed opening 2 by a transfer pump (B) 1 and discharged through holes in area B of the perforated plate 3 in a molten state at 255°C at a rate of 10 g/minute per hole.

These supplied materials were polymerized under a reduced pressure of 65 Pa while being allowed to fall along the support at an ambient temperature the same as the discharge temperature and discharged from an outlet 9 via a discharge pump 8. Then, using a pelletizer, pellets of PET resin copolymerized with polytetramethylene glycol were obtained.

Referring to the perforated plate, one having a thickness of 50 mm and 14 holes 1 mm in diameter linearly aligned in two parallel rows in a distance of 70 mm, with 7 holes in each row at an interval of 10 mm was used. The holes belonging to area A and the holes belonging to area B were alternately aligned. As the support, a lattice form support composed of a wire 2 mm in diameter and 8 m in length each attached immediately below the holes hanging vertically therefrom and wires 2 mm in diameter and 100 mm in length attached perpendicularly to the above wire at an interval of 100 mm was used. The material of the support was stainless steel.

Referring to prepolymers, those produced by adding 0.04% by weight of diantimony trioxide and trimethyl phosphate in a proportion of 100 ppm based on the weight ratio of phosphorus were used. The residence time in the polymerization reactor was 60 minutes. The residence time means a value obtained by dividing the amount of polymer present in the polymerization reactor by the amount supplied. During the polymerization, intensive foaming of prepolymer discharged through the perforated plate and the consequent contamination of the nozzle surface and walls hardly occurred, while the falling resin contained a large amount of bubbles and rolled down along the support in the form of bubble balls.

The obtained polymer was uniform and high quality copolymerized PET resin pellet having rubber elasticity. Properties of the obtained resin are shown in Table 2.

Comparative Example 1

Using a conventional agitation vessel type melt polymerization reactor for PET resin, polymerization of PET resin was performed batchwise at a polymerization temperature of 285°C in a vacuum of 100 Pa. When the intrinsic viscosity [η] reached 0.30 dl/g, polytetramethylene glycol was added thereto in the same amount as PET resin, and polymerization was continued under conditions of a polymerization temperature of 285°C and a vacuum of 100 Pa for 60 minutes to produce copolymerized PET resin having an intrinsic viscosity [η] of 0.65 dl/g.

The obtained polymer was yellow and smelled like decomposed polytetramethylene glycol. Properties of the obtained resin are shown in Table 2.

Example 3

Using the apparatus shown in Figure 8, a prepolymer of PET resin having an intrinsic viscosity [η] of 0.43 dl/g, a carboxyl group content at polymer terminal of 33 meq/kg and a crystalline melting point of 260°C was supplied to a polymerization reactor 10 through a feed opening 2 by a transfer pump (A) 1, and the prepolymer was discharged through holes in area A of a perforated plate 3 in a molten state at 265°C at a rate of 10 g/minute per hole. Further, the same prepolymer of PET resin was supplied to the polymerization reactor 10 through the feed opening 2 by a transfer pump (B) 1 and discharged through holes in area B of the perforated plate 3 in a molten state at 265°C at a rate of 10 g/minute per hole.

Referring to the perforated plate 3, one having a thickness of 50 mm and 20 holes 1 mm in diameter linearly aligned in two parallel rows in a distance of 70 mm, with 10 holes in each row at an interval of 10 mm was used. The holes belonging to area A and the holes belonging to area B each correspond to the row of 10 holes linearly aligned at an interval of 10 mm. As the support 5, two lattice form supports (supports a and b) composed of a wire 2 mm in diameter and 8 m in length each attached immediately below the holes hanging vertically therefrom and wires 2 mm in diameter and 120 mm in length attached perpendicularly to the above wire at an interval of 100 mm were used. The prepolymer supplied from area A of the perforated plate 3 was allowed to fall along the support a and the prepolymer supplied from area B of the perforated plate 3 was allowed to fall along the support b. The supports a and b were positioned so that streams of the prepolymers were not combined. The material of the supports was stainless steel.

Two outlets 9 were provided and the polymer that has fallen along the support a was discharged from area I of the outlets, and the polymer that has fallen along the support b was discharged from area II of the outlets so as not to be combined with each other.

Polymerization was performed under a reduced pressure of 65 Pa while allowing the prepolymer to fall along the support at an ambient temperature the same as the discharge temperature, and the resultant was discharged from the polymerization reactor 10 using discharge pumps (I and II) 8. The produced polymers were then transferred through transfer pipes and distributors (I and II) I1, and preform molding and molding of hollow articles were continuously performed at a molding temperature of 280°C using a twin-screw stretch-blow molding machine (SBIII-100H-15 manufacture by Aoki Technical Laboratory Inc.) as a molding machine A (I). Using an injection molding machine (MJEC-10 manufactured by MODERN MACHINERY CO., LTD.) as a molding machine A (II), molding was performed at 280°C to prepare a dumbbell specimen. As molding machines B (I and II), pelletizers (I and II) of the same type were set. Molding machines C (I and II) were not connected.

Referring to prepolymer, one produced by adding 0.04% by weight of diantimony trioxide and trimethyl phosphate in a proportion of 100 ppm based on the weight ratio of phosphorus was used. The residence time in the polymerization reactor was 70 minutes. The residence time means a value obtained by dividing the amount of polymer present in the polymerization reactor by the amount supplied. During the polymerization, intensive foaming of prepolymer discharged through the perforated plate and the consequent contamination of the nozzle surface and walls hardly occurred, while the falling resin contained a large amount of bubbles and rolled down along the support in the form of bubble balls.

As described above, the prepolymer was first supplied from areas A and B of the perforated plate at 10 g/minute per hole, and polymerization and molding were performed to produce molded articles and pellets. Their properties were evaluated and it has been found that pellets produced using pelletizers I and II had the same quality.

Then, the prepolymer was supplied from area A of the perforated plate at 10 g/minute per hole and from area B of the perforated plate at 8 g/minute per hole, and polymerization and molding were performed to produce molded articles and pellets. Their properties were evaluated and it has been found that molded articles and pellets having a different polymerization degree based on the supply rate of the prepolymer were simultaneously but separately obtained. Properties of the obtained molded articles and resin pellets are shown in Table 3.

Example 4

Using the apparatus shown in Figure 8, which is the same as the apparatus used in Example 3, a prepolymer of PET resin having an intrinsic viscosity [η] of 0.43 dl/g, a carboxyl group content at polymer terminal of 33 meq/kg and a crystalline melting point of 260°C was supplied to a polymerization reactor 10 through a feed opening 2 by a transfer pump (A) 1, and the prepolymer was discharged through holes in area A of a perforated plate 3 in a molten state at 265°C at a rate of 10 g/minute per hole. At the same time, a prepolymer obtained by copolymerizing 2% by mole of cyclohexane dimethanol with PET having an intrinsic viscosity [η] of 0.45 dl/g, a carboxyl group content at polymer terminal of 30 meq/kg and a crystalline melting point of 248°C was supplied to the polymerization reactor 10 through the feed opening 2 via a transfer pump (B) 1 and discharged through holes in area B of the perforated plate 3 in a molten state at 265°C at a rate of 10 g/minute per hole.

Polymerization was performed under a reduced pressure of 65 Pa while allowing the prepolymers to fall along the support at an ambient temperature the same as the discharge temperature. Referring to prepolymers, those produced by adding 0.04% by weight of diantimony trioxide and trimethyl phosphate in a proportion of 100 ppm based on the weight ratio of phosphorus were used. The residence time in the polymerization reactor was 65 minutes. The residence time means a value obtained by dividing the amount of polymer present in the polymerization reactor by the amount supplied. During the polymerization, intensive foaming of prepolymer discharged through the perforated plate and the consequent contamination of the nozzle surface and walls hardly occurred, while the falling resin contained a large amount of bubbles and rolled down along the support in the form of bubble balls.

As described above, each prepolymer was supplied from area A or B of the perforated plate at 10 g/minute per hole, and polymerization and molding were performed to produce molded articles and pellets. Their properties were evaluated and it has been found that the polymer obtained from the discharge pump I side was PET having a crystalline melting point of 260°C and the polymer obtained from the discharge pump II side was a copolymer in which 2% by mole of cyclohexane dimethanol was copolymerized with PET having a crystalline melting point of 248°C. As herein described, different molded articles and pellets were obtained simultaneously but separately. Properties of the obtained molded articles and resin pellets are shown in Table 4.

Example 5

Using the apparatus shown in Figure 5, a prepolymer of PET resin having an intrinsic viscosity [η] of 0.32 dl/g, a carboxyl group content at polymer terminal of 29 meq/kg and a crystalline melting point of 255°C was supplied to a polymerization reactor 10 through a feed opening 2 by a transfer pump (A) 1, and the prepolymer was discharged through holes in area A of a perforated plate 3 in a molten state at 255°C at a rate of 10 g/minute per hole. At the same time, polytetramethylene glycol having an average molecular weight of 2000 was supplied to the polymerization reactor 10 through the feed opening 2 via a transfer pump (B) 1 and discharged through holes in area B of the perforated plate 3 in a molten state at 255°C at a rate of 10 g/minute per hole.

Referring to the perforated plate, one having a thickness of 50 mm and 14 holes 1 mm in diameter linearly aligned in two parallel rows in a distance of 70 mm, with 7 holes in each row at an interval of 10 mm was used. The holes belonging to area A and the holes belonging to area B were alternately aligned. Specifically, one row has a line of (ABABABA), which is referred to as row a, and the other row has a line of (BABABAB), which is referred to as row b.

As the support, two lattice form supports (supports a and b) composed of a wire 2 mm in diameter and 8 m in length each attached immediately below the holes hanging vertically therefrom and wires 2 mm in diameter and 100 mm in length attached perpendicularly to the above wire at an interval of 100 mm were used. The prepolymer and the polytetramethylene glycol supplied through the row a of the perforated plate was allowed to fall along the support a and the prepolymer and the polytetramethylene glycol supplied through the row b of the perforated plate was allowed to fall along the support b. The supports a and b were positioned so that streams of the prepolymers were not combined. The material of the supports was stainless steel.

Two outlets 9 were provided and the polymer that has fallen along the support a was discharged from area I of the outlets, and the polymer that has fallen along the support b was discharged from area II of the outlets so as not to be combined with each other.

Polymerization was performed under a reduced pressure of 65 Pa while allowing the prepolymer to fall along the support at an ambient temperature the same as the discharge temperature, and the produced polymers were discharged from the polymerization reactor by discharge pumps (I and II) 8 and pelletized using pelletizers I and II of the same type.

Referring to prepolymer, one produced by adding 0.04% by weight of diantimony trioxide and trimethyl phosphate in a proportion of 100 ppm based on the weight ratio of phosphorus was used. The residence time in the polymerization reactor was 60 minutes. The residence time means a value obtained by dividing the amount of polymer present in the polymerization reactor by the amount supplied. During the polymerization, intensive foaming of prepolymer discharged through the perforated plate and the consequent contamination of the nozzle surface and walls hardly occurred, while the falling resin contained a large amount of bubbles and rolled down along the support in the form of bubble balls. The polymers discharged from the discharge pumps I and II were uniform and high quality copolymerized PET resin pellets having rubber elasticity and each having a polytetramethylene glycol content of 42.9% by weight and 57.1% by weight. Properties of the obtained resins are shown in Table 5.

[Table 1]

| Polymerization condition (amount discharged through perforated plate) | Molded article | Shape | Intrinsic viscosity (dl/g) | Crystalline melting point (°C) | Molecular weighty distribution (Mw/Mn) | Hue (L value, b value) | Acetaldehyde content (ppm) |
|---|---|---|---|---|---|---|---|
| Area A =10 g/ minute·hole | Molded article A | Hollow body | 0.76 | 248.0 | 2.0 | 99.6,0.16 | 6.3 |
| Area B =10 g/ minute·hole | Molded article B | Dumbbell | 0.74 | 248.1 | 1.9 | 97.5,0.21 | 9.4 |
| | Molded article C | Pellet | 0.76 | 248.0 | 2.0 | 99.7,0.13 | 5.3 |
| Area A =15 g/ minute-hole | Molded article A | Hollow body | 0.76 | 252.2 | 2.0 | 99.1,0.16 | 6.4 |
| Area B =5 g/ minute·hole | Molded article B | Dumbbell | 0.74 | 252.2 | 2.0 | 96.6,0.29 | 10.1 |
| | Molded article C | Pellet | 0.76 | 252.1 | 2.0 | 99.5,0.17 | 5.5 |
| Area A =5 g/ minute·hole | Molded article A | Hollow body | 0.77 | 243.4 | 1.9 | 99.4,0.15 | 5.3 |
| Area B =15 g/ minute.hole | Molded article B | Dumbbell | 0.74 | 243.3 | 2.0 | 97.6,0.26 | 9.1 |
| | Molded article C | Pellet | 0.76 | 243.3 | 2.0 | 99.1,0.18 | 4.5 |

[Table 2]

| Polymerization condition | Intrinsic viscosity (dl/g) | Crystalline melting point (°C) | Molecular weight distribution (Mw/Mn) | Hue (L value, b value) | Acetaldehyde content (ppm) |
|---|---|---|---|---|---|
| Example 2 | 0.82 | 258.3 | 2.1 | 99.1,0.21 | 7.1 |
| Comparative Example 1 | 0.65 | 255.9 | 2.3 | 94.3, 1.71 | 174 |

[Table 3]

| Polymerization condition | Molded article | Shape | Intrinsic viscosity | Crystalline melting point | Molecular weight distribution | Hue | Acetaldehyde content |
|---|---|---|---|---|---|---|---|
| (amount discharged through perforated plate) | | | (dl/g) | (°C) | (Mw/Mn) | (L value, b value) | (ppm) |
| Area A =10 g/minute.hole | Molded article A (I) | Hollow body | 0.74 | 260.1 | 2.0 | 99.6,0.16 | 7.7 |
| Area B =10 g/minute.hole | Pelletizer (I) | Pellet | 0.76 | 260.0 | 2.0 | 99.7,0.13 | 4.5 |
| | Molded article A (II) | Dumbbell | 0.72 | 260.0 | 2.0 | 99.5,0.15 | 9.5 |
| | Pelletizer (II) | Pellet | 0.76 | 260.0 | 2.0 | 99.7,0.13 | 4.5 |
| | Molded article A (I) | Hollow body | 0.74 | 260.1 | 2.0 | 99.6,0.16 | 7.7 |
| Area A =10 g/minute·hole Area B =8 g/minute.hole | Pelletizer (I) | Pellet | 0.76 | 260.0 | 2.0 | 99.7,0.13 | 4.5 |
| | Molded article A (II) | Dumbbell | 0.82 | 260.0 | 2.0 | 98.5,0.19 | 11.4 |
| | Pelletizer (II) | Pellet | 0.84 | 260.0 | 2.0 | 99.2,0.16 | 5.7 |

[Table 4]

| Polymerization condition | Molded article | Shape | Intrinsic viscosity | Crystalline melting point | Molecular weight distribution | Hue | Acetaldehyde content |
|---|---|---|---|---|---|---|---|
| (amount discharged through perforated plate) | | | (dl/g) | (°C) | (Mw/Mn) | (L value, b value) | (ppm) |
| Area A =10 g/minute·hole | Molded article A (I) | body | 0.75 | 260.1 | 2.0 | 99.6,0.16 | 7.4 |

(continued)

| Polymerization condition | Molded article | Shape | Intrinsic viscosity | Crystalline melting point | Molecular weight distribution | Hue | Acetaldehyde content |
|---|---|---|---|---|---|---|---|
| (amount discharged through perforated plate) | | | (dl/g) | (°C) | (Mw/Mn) | (L value, b value) | (ppm) |
| Area B =10 g/ minute·hole | Pelletizer (I) | Pellet | 0.76 | 260.0 | 2.0 | 99.7,0.13 | 4.6 |
| | Molded article A (II) | Dumbbell | 0.79 | 248.1 | 1.9 | 99.5, 0.15 | 8.3 |
| | Pelletizer (II) | Pellet | 0.80 | 248.0 | 2.0 | 99.7, 0.13 | 4.4 |

[Table 5]

| Polymerization condition Polymerization condition | | PTMG content | Intrinsic viscosity | Crystalline melting point | Molecular weight distribution | Hue | Acetaldehyde content |
|---|---|---|---|---|---|---|---|
| | | (wt%) | (dl/g) | (°C) | (Mw/Mn) | (L value, b value) | (ppm) |
| Example 5 | Pelletizer I | 42.9 | 0.82 | 258.3 | 2.1 | 99.0,0.19 | 6.9 |
| | Pelletizer II | 57.1 | 0.93 | 258.1 | 2.1 | 99.2,0.15 | 7.1 |

Industrial Applicability

The present invention aims at producing various high quality polycondensation polymers having a high polymerization degree, not colored and in which the content of impurities generated by thermal decomposition is small and molded articles thereof by melt polycondensation at low cost. This technique is applicable to production of a polymer whose properties are improved by copolymerizing a different monomer or adding a different polymer or various modifiers and suitable for producing a wide variety of products in small quantities.

Brief Description of the Drawings

[Figure 1] A schematic view illustrating an example of a polymerization reactor used in the present invention;
[Figure 2-1] A schematic view illustrating an example of a method of supplying a prepolymer to a perforated plate employed in the present invention: (1) an example of supplying one prepolymer through each area of a perforated plate;
[Figure 2-2] A schematic view illustrating an example of a method of supplying a prepolymer to a perforated plate employed in the present invention: (2) an example of supplying one or a plurality of prepolymers and/or polymer modifiers through each area of a perforated plate;
[Figure 3] A schematic view of an inert gas absorption apparatus and a polymerization reactor used in the present invention;
[Figure 4] A schematic view illustrating an example of a polymerization reactor and a molding machine used in the present invention;
[Figure 5] A schematic view illustrating an example of a polymerization reactor used in the present invention;
[Figure 6-1] A schematic view illustrating an example of a method of supplying a prepolymer to a perforated plate, a method of polymerization and a method of discharging a polymer employed in the present invention: (1) an example of supplying one prepolymer through each area of a perforated plate;

[Figure 6-2] A schematic view illustrating an example of a method of supplying a prepolymer to a perforated plate, a method of polymerization and a method of discharging a polymer employed in the present invention: (2) an example of supplying one or a plurality of prepolymers and/or polymer modifiers through each area of a perforated plate;

[Figure 7] A schematic view of an inert gas absorption apparatus and a polymerization reactor used in the present invention; and

[Figure 8] A schematic view illustrating an example of a polymerization reactor and a molding machine used in the present invention.

Description of symbols

| 1 | transfer pump |
| 2 | feed opening |
| 3 | perforated plate |
| 4 | observation hole |
| 5 | support and falling polymer |
| 6 | inert gas introducing port |
| 7 | evacuation port |
| 8 | drainage pump |
| 9 | outlet |
| 10 | polymerization reactor |
| N1 | transfer pump |
| N2 | feed opening |
| N3 | perforated plate |
| N5 | support and falling polymer |
| N6 | inert gas introducing port |
| N7 | evacuation port |
| N8 | drainage/transfer pump |
| N10 | inert gas absorption apparatus |
| I1 | transfer pipe and distributor |
| I2 | molding machine A |
| I3 | molding machine B |
| I4 | molding machine C |

**Claims**

1. A method for producing a polycondensation polymer, which comprises: introducing a prepolymer of a polycondensation polymer into a polymerization reactor through a feed opening in a molten state; discharging the introduced prepolymer through holes of a perforated plate; and then polycondensing the prepolymer under reduced pressure, while allowing the prepolymer to fall along a support, wherein the perforated plate has two or more areas and polycondensation is performed by introducing a prepolymer and/or a polymer modifier into each of the areas and discharging the introduced prepolymer and/or polymer modifier through holes of each of the areas.

2. The method for producing a polycondensation polymer according to claim 1, wherein the polymerization reactor has two or more outlets for delivering a produced polymer.

3. The method for producing a polycondensation polymer according to claim 1 or 2, wherein the support has two or more areas corresponding to each area of the perforated plate of the polymerization reactor, or/and a polymer is delivered through an outlet divided into two or more areas corresponding to each area of the perforated plate or the support.

4. The method for producing a polycondensation polymer according to any one of claims 1 to 3, wherein the prepolymer and/or the polymer modifier are reacted with a molecular weight modifier at a step prior to introducing the prepolymer and/or the polymer modifier into the polymerization reactor.

5. The method for producing a polycondensation polymer according to any one of claims 1 to 4, wherein the polycondensation polymer is a polyester resin.

6. A polycondensation polymer produced by the method for producing a polycondensation polymer according to any one of claims 1 to 5, having a molecular weight distribution represented by Mw/Mn of 2.0 or higher.

7. A polycondensation polymer produced by the method for producing a polycondensation polymer according to any one of claims 1 to 5, which is a polymer alloy.

8. A polycondensation polymer produced by the method for producing a polycondensation polymer according to any one of claims 1 to 5, which is a polyester elastomer.

9. A method for producing a molded article which comprises: transferring a polymer produced by the method for producing a polycondensation polymer according to any one of claims 1 to 5 in a molten state to a molding machine and molding the same.

10. An apparatus for producing a polycondensation polymer comprising a polymerization reactor having at least a feed opening, a perforated plate, a support and an outlet as constituents, wherein the perforated plate has two or more areas, and a prepolymer and/or a polymer modifier is introduced into each of the areas, the introduced prepolymer and/or polymer modifier is discharged through holes of each of the areas, and polycondensation is performed under reduced pressure while allowing the prepolymer and/or polymer modifier to fall along the support.

11. The apparatus for producing a polycondensation polymer according to claim 10, wherein the polymerization reactor has two or more outlets.

12. The apparatus for producing a polycondensation polymer according to claim 10 or 11, wherein the support of the polymerization reactor has two or more areas corresponding to each area of the perforated plate, or/and the outlet is divided into two or more areas corresponding to each area of the perforated plate or the support.

[Figure 1]

EP 1 820 816 A1

1. Transfer pump (A)

1. Transfer pump (B)

Prepolymer

Prepolymer or polymer modifier

2. Feed opening

Area B

Area A

3. Perforated plate

7. Evacuation port

10. Polymerization reactor

4. Observation hole

5. Support and falling polymer

6. Inert gas introducing port

8. Drainage pump

9. Ejecting port

Produced polymer

[Figure 2-1]

Prepolymer

Distributor

1. Transfer pump (A-D)

Area ·A | Area B | Area C | Area D

3. Perforated plate

[Figure 2-2]

Prepolymer C or polymer modifier

Prepolymer B or polymer modifier

Prepolymer A

Distributor

1. Transfer pump (A-D)

Area A | Area B | Area C | Area D

3. Perforated plat

[Figure 3]

EP 1 820 816 A1

33

N1. Transfer pump

1. Transfer pump (B)

Prepolymer

Prepolymer or polymer modifier

N2. Feed opening

Area B

2. Feed opening

Area A  3. Perforated plate

N3. Perforated plate

7. Evacuation port

N6. Inert gas introducing port

N10. Inert gas absorption device

N5. Support and falling polymer

4. Observation hole

N7. Evacuation port

10. Polymerization reactor

5. Support and falling polymer

N8. Drainage and transfer pump (A)

Produced polymer

8. Drainage pump

9. Ejecting port

[Figure 4]

1. Transfer pump (A)
1. Transfer pump (B)

Prepolymer

Prepolymer or polymer modifier

2. Feed opening

Area B

Area A

3. Perforated plate

7. Evacuation port

5. Support and falling polymer

10. Polymerization reactor

4. Observation hole

6. Inert gas feed opening

8. Drainage pump

M

12. Molding machine A

13. Molding machine B

14. Molding machine C

11. Transfer tube and distributor

EP 1 820 816 A1

34

[Figure 5]

1. Transfer pump (A)    1. Transfer pump (B)

Prepolymer

Prepolymer or polymer modifier

Area B
Area A

2. Feed opening

3. Perforated plate

7. Evacuation port

10. Polymerization reactor

4. Observation hole

5. Support and falling polymer

6. Inert gas feed opening

Area I    Area II

9. Ejecting port (I)    9. Ejecting port (II)

8. Drainage pump (I)    8. Drainage pump (II)

Produced polymer (I)    Produced polymer (II)

EP 1 820 816 A1

[Figure 6-1]

Prepolymer

Diversion switching valve

1. Transfer pump (A-D)

| Area A | Area B | Area C | Area D |

3. Perforated plate

Support a

Support b

Support c

10. Polymerization reactor

5. Support (a-c)

Area II | Area II | Area III | Area IV

9. Ejecting port (I-IV)

8. Drainage pump (I-IV)

[Figure 6-2]

Prepolymer A | Prepolymer B or polymer modifier | Prepolymer C or polymer modifier

Diversion switching valve

1. Transfer pump (A-D)

Area A | Area B | Area C | Area D

3. Perforated plate

Support a

Support b

Support c

5. Support (a-c)

10. Polymerization reactor

Area I | Area II | Area III

9. Ejecting port (I-III)

8. Drainage pump (I-III)

EP 1 820 816 A1

37

[Figure 7]

10. Polymerization reactor

1. Transfer pump (B)

Prepolymer or polymer modifier

Area B
Area A    3. Perforated plate

7. Evacuation port

5. Support and falling polymer

9. Ejecting port (II)

8. Drainage pump (II)

Produced polymer (II)

Area II

2. Feed opening

4. Observation hole

Area I

9. Ejecting port (I)

8. Drainage pump (I)

Produced polymer (I)

N1. Transfer pump

N2. Feed opening

Prepolymer

N3. Perforated plate

N6. Inert gas introducing port

N5. Support and falling polymer

N7. Evacuation port

N8. Discharge/transfer pump (A)

N10. Inert gas absorption device

[Figure 8]

Figure 8 — Polymerization reactor diagram

Labels:
1. Transfer pump (B)
Prepolymer or polymer modifier
1. Transfer pump (A)
Prepolymer
2. Feed opening
Area B
Area A
7. Evacuation port
5. Support and falling polymer
6. Inert gas feed opening
3. Perforated plate
4. Observation hole
10. Polymerization reactor
Area I
Area II
9. Ejecting port (II)
8. Drainage pump (II)
9. Ejecting port (I)
8. Drainage pump (I)
11. Transfer tube and distributor (II)
11. Transfer tube and distributor (I)
12. Molding machine A (II)
13. Molding machine B (II)
14. Molding machine C (II)
12. Molding machine A (I)
13. Molding machine B (I)
14. Molding machine C (I)

## INTERNATIONAL SEARCH REPORT

| | International application No. |
|---|---|
| | PCT/JP2005/021643 |

A. CLASSIFICATION OF SUBJECT MATTER
*C08G85/00*(2006.01), *C08G63/78*(2006.01)

According to International Patent Classification (IPC) or to both national classification and IPC

B. FIELDS SEARCHED

Minimum documentation searched (classification system followed by classification symbols)
C08G85/00, C08G63/78

Documentation searched other than minimum documentation to the extent that such documents are included in the fields searched
Jitsuyo Shinan Koho          1922-1996   Jitsuyo Shinan Toroku Koho   1996-2006
Kokai Jitsuyo Shinan Koho    1971-2006   Toroku Jitsuyo Shinan Koho   1994-2006

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2004-225008 A  (Asahi Kasei Chemicals Corp.), 12 August, 2004 (12.08.04), Claims; Par. No. [0082]; Figs. 1 to 3 (Family: none) | 1-12 |
| A | JP 2004-224895 A  (Asahi Kasei Chemicals Corp.), 12 August, 2004 (12.08.04), Claims; Par. No. [0080]; Figs. 1 to 3 (Family: none) | 1-12 |

☒ Further documents are listed in the continuation of Box C.          ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 06 February, 2006 (06.02.06) | 14 February, 2006 (14.02.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

| | INTERNATIONAL SEARCH REPORT | International application No. |
|---|---|---|
| | | PCT/JP2005/021643 |

C (Continuation).   DOCUMENTS CONSIDERED TO BE RELEVANT

| Category* | Citation of document, with indication, where appropriate, of the relevant passages | Relevant to claim No. |
|---|---|---|
| A | WO 2001/077188 A1 (Bayer AG.),<br>18 October, 2001 (18.10.01),<br>Claims; Figs. 1 to 3<br>& DE 10016894 A1        & AU 200163802 A<br>& EP 1274741 A1         & BR 200107545 A<br>& CN 1420895 A          & US 2003/176636 A1<br>& JP 2003-530468 A      & MX 2002009851 A1<br>& TW 553964 A | 1-12 |
| A | WO 1999/065970 A1 (Asahi Chemical Industry Co.,<br>Ltd.),<br>23 December, 1999 (23.12.99),<br>Claims; Figs. 1(a) to 2<br>& AU 9941669 A          & EP 1095960 A1<br>& US 6265526 B1         & CN 1303404 A<br>& KR 2001071352 A       & TW 459004 A | 1-12 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003327812 A
- JP 2004263195 A
- JP 2000017162 A
- JP 48008355 B
- JP 53017569 A

**Non-patent literature cited in the description**

- Polymer Synthesis. Academic Press, Inc, 1992, vol. 1
- **KAITEI GASU KYUSHU.** Kagaku Sochi Sekkei/Sosa Series No.2. Kagaku Kogyo Co., Ltd, 15 March 1981, 49-54
- Research Report of Research Group on Reaction Engineering: Reactive Processing Part 2. 1992
- Handbook of Chemical Equipment. 1989